(19) **Europäisches Patentamt / European Patent Office / Office européen des brevets**

(11) **EP 4 162 663 B1**

(12) **FASCICULE DE BREVET EUROPEEN**

(45) Date de publication et mention
de la délivrance du brevet:
**10.09.2025 Bulletin 2025/37**

(21) Numéro de dépôt: **21734429.0**

(22) Date de dépôt: **01.06.2021**

(51) Classification Internationale des Brevets (IPC):
***H04L 9/40*** *(2022.01)*

(52) Classification Coopérative des Brevets (CPC):
**H04L 63/061; H04L 63/0471; H04L 67/141;
H04L 69/164;** H04L 67/02

(86) Numéro de dépôt international:
**PCT/FR2021/050992**

(87) Numéro de publication internationale:
**WO 2021/245350 (09.12.2021 Gazette 2021/49)**

(54) **PROCÉDÉ DE CAPTURE D'UN PAQUET D'UNE SESSION CHIFFRÉE**

VERFAHREN ZUR ERFASSUNG EINES PAKETS AUS EINER VERSCHLÜSSELTEN SITZUNG

METHOD FOR CAPTURING A PACKET FROM AN ENCRYPTED SESSION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.06.2020 FR 2005863**

(43) Date de publication de la demande:
**12.04.2023 Bulletin 2023/15**

(73) Titulaire: **Orange
92130 Issy-les-Moulineaux (FR)**

(72) Inventeurs:
• **ALLAL, Imed
92326 CHÂTILLON CEDEX (FR)**
• **STEPHAN, Emile
92326 CHÂTILLON (FR)**
• **FROMENTOUX, Gaël
92326 CHÂTILLON (FR)**
• **BRAUD, Arnaud
92326 CHÂTILLON (FR)**

(56) Documents cités:
**WO-A1-2020/043319     FR-A1- 3 081 653**

EP 4 162 663 B1

**Description**

**1. Domaine technique**

L'invention concerne le transport de flux de données multiplexées dans un protocole, tel qu'un protocole de transport, d'une infrastructure de communications et vise à proposer une solution pour permettre d'appliquer un traitement à un flux de données spécifique parmi un ensemble de flux de données transportés.

**2. Etat de la technique**

Dans les réseaux de communications, les flux de données sont de plus en plus acheminés de façon sécurisée, c'est-à-dire en appliquant des mécanismes d'authentification et de confidentialité aux données échangées entre deux pairs. Cette sécurisation s'est accrue avec l'utilisation du protocole HTTP/2 (Hypertext Transfer Protocol/2) transporté sur le protocole TLS (Transport Layer Security) et TCP (Transmission Control Protocol) puis le développement rapide du protocole de transport QUIC (Quick UDP Internet Communications). Ce protocole QUIC est largement utilisé par plusieurs navigateurs Web et serveurs applicatifs. QUIC réunit dans un seul protocole les fonctions de transport, de multiplexage et de protection des protocoles RTP (Real-time Transport Protocol), MPTCP (MultiPath TCP), TCP, SCTP (Stream Control Transmission Protocol) et TLS. Il renforce la sécurité par des mécanismes intégrés d'authentification et de confidentialité des données de signalisation présents dans l'entête des paquets, et de renouvellement de clés dès les premiers échanges de messages du protocole (Handshake process). Il est par ailleurs à noter que le protocole QUIC est un exemple de protocole ayant de telles caractéristiques de sécurité et de multiplexage de plusieurs flux de données dans une unique connexion mais ces caractéristiques s'appliquent également à d'autres protocoles. Ainsi, les protocoles MPTCP, HTTP3, SCTP, SPDY et HTTP2 permettent également de multiplexer plusieurs flux de données et présentent donc des contraintes comme exposé ci-dessous.

Un opérateur assurant l'acheminement des données transportées dans un protocole, tel que QUIC, se trouve confronté à un problème d'identification d'un flux d'une part en raison de l'application d'un mécanisme de sécurité, tel que le chiffrement et d'autre part par le problème de multiplexage de flux de données dans une unique session de données. Cela peut par exemple survenir dans le cadre du développement des services de données véhiculaires. Il est à noter qu'un service eCall est en cours de déploiement en Europe. Le service eCall représente une initiative de la Commission européenne visant à introduire, à terme dans tous les véhicules vendus dans l'Union européenne, un système d'appel d'urgence automatique (eCall) basé sur un service public, permettant à une voiture accidentée d'appeler instantanément les services d'urgence tout en envoyant un certain nombre de données, dont sa position précise, et ce, quel que soit le pays de l'UE dans lequel elle se trouve. Ce système, basé sur le numéro unique d'urgence européen 112 amélioré de la géolocalisation, permettra une intervention des services d'urgence plus rapide, adaptée à la sévérité de l'accident et au type de véhicule impliqué.

Les constructeurs automobiles ont ainsi commencé le déploiement des services eCall dans tous les nouveaux modèles sortis à partir d'avril 2018 via l'intégration des boitiers connectés appelés TCU (Telematic Control Unit) équipés avec des cartes SIMs. Or, il apparaît que le développement de ce service d'assistance eCall s'accompagne d'autres services proposés à partir d'un tel boitier TCU. Ces services pourront être des services d'assistance au conducteur, des services de divertissement ou bien encore des services de contrôle du véhicule. Les données associées à ces différents services requièrent de la part d'un opérateur des traitements différents. Ainsi des données relatives à des services de divertissement pourront être facturées à un client, des données de contrôle du véhicule pourront être dupliquées pour être utilisées en cas de problème et les données d'assistance pourront se voir appliquer une haute priorité puisqu'elles ne doivent pas souffrir d'une moindre latence au cours de leur transmission. Ces données, émises par exemple par l'équipement TCU ont par ailleurs la particularité d'être acheminées vers un ou des serveurs non différenciés. Il apparait en effet que des fournisseurs de contenus ou des fournisseurs de solutions de mise en cache de données peuvent être émetteur ou destinataire d'une pluralité de type de données parmi les différents types de données (assistance, divertissement, contrôle...) décrits ci-dessus. Le document US 2005-0177506A1 décrit une solution permettant de différencier des flux en vue d'une facturation associée à chaque flux mais la solution proposée s'appuie sur une distinction des flux en fonction de l'adresse IP. Cette solution n'est pas opérante pour le problème soulevé ci-dessus puisque les flux sont tous vus par un équipement d'acheminement d'un opérateur comme provenant d'un équipement unique, tel que l'équipement TCU, et donc d'une seule adresse IP. Il est à noter que l'adresse de destination ne permet pas non plus de distinguer les flux puisque cette adresse peut également être commune aux différents flux de données multiplexés si un serveur de contenus ou un serveur cache est destinataire de plusieurs flux distincts. Le document WO2020043319A1 (de SARKERZAHEDUZZAMAN, IHLAR MARCUS , MUÑOZ DE LA TORRE ALONSO MIGUEL ANGEL et SANCHEZ VEGA VERONICA) divulgue un procédé de détection du trafic QUIC dans un réseau de télécommunication entre un équipement utilisateur, (UE) et un fournisseur de contenu (CP), dans laquelle ledit UE a une session d'application établie avec ledit CP, pour une application particulière, en utilisant QUIC comme protocole de transport, dans laquelle ladite méthode comprend les étapes suivantes : réception, par une fonction de plan d'utilisateur (UPF), d'une liste d'identifiants de connexion qui identifient ladite session d'application établie entre ledit UE et ledit CP, réception, par ladite UPF, d'un paquet QUIC comprenant un identifiant de connexion, comprenant ledit réseau de télécommunication, en provenance dudit CP, une liste d'identifiants de connexion qui identifient ladite session d'application établie entre ledit UE et ledit CP, la réception, par ladite UPF, d'un paquet QUIC comprenant un identificateur de connexion, la détection, par ladite UPF, dudit trafic QUIC en déterminant que ledit identifiant de connexion dudit paquet QUIC reçu est compris dans ladite d'identifiants de connexion.

La présente invention a pour objet d'apporter des améliorations par rapport à l'état de la technique.

### 3. Exposé de l'invention

La situation est améliorée grâce à un procédé de discrimination d'un premier message concernant une première application parmi un ensemble de messages concernant une pluralité d'application, émis par un équipement terminal à destination d'un serveur de données par l'intermédiaire d'un dispositif d'acheminement, apte à appliquer un traitement à un attribut relatif au premier message, ledit procédé étant mis en œuvre par l'équipement terminal et comprenant :

- ajout d'un attribut relatif au premier message dans un paquet d'information, ledit paquet regroupant des attributs auxquels le traitement est appliqué,
- application d'un marquage du paquet d'information comprenant l'attribut ajouté,
- émission du paquet d'information comprenant le marquage appliqué à destination du serveur de données.

Le procédé permet ainsi à un opérateur administrant un dispositif, tel qu'un routeur ou un équipement de type DPI (en anglais Deep Packet Inspection) ou tout autre équipement d'un réseau de communication, de pouvoir identifier un message parmi un ensemble de messages sans ambiguïté et sans nécessiter de traitements complexes. Cette identification devient en effet de plus en plus complexe en raison d'une part des serveurs de contenus regroupant une grande variété de services indépendants et d'autre part par une utilisation de protocoles multiplexant de plus en plus de messages issus d'applications ou de terminaux divers, ces applications et ces terminaux transmettant les messages par l'intermédiaire d'un équipement terminal . Dans ce cas, les identifiants tels que les adresses IP de l'équipement terminal et/ou du serveur de données ne suffisent pas pour identifier de façon certaine un message d'une application ou d'un terminal. Le procédé permet qu'un équipement terminal puisse identifier et regrouper certains messages, en fonction d'attributs divers tels que le terminal à l'origine du message, le type d'application ou bien l'application utilisée, la qualité de service relative à une application, dans un paquet spécifique. L'équipement construit ainsi un paquet regroupant les messages qui se verront appliquer un traitement spécifique par un dispositif du réseau et lui applique un marquage, par exemple en modifiant un paramètre de marquage de ce message de telle façon qu'à la lecture de ce paramètre de marquage, le dispositif identifie rapidement ce paquet pour ensuite appliquer un traitement aux messages ajoutés par l'équipement terminal dans le paquet.

Selon un aspect du procédé de discrimination, l'équipement terminal émet la pluralité de messages à destination du serveur de données dans une session sécurisée entre l'équipement terminal et le serveur de données.

Le procédé de discrimination revêt un intérêt particulier lorsque la session entre les messages échangés entre l'équipement terminal et le serveur échange des données de façon sécurisée, c'est-à-dire par exemple via une connexion assurant la confidentialité des messages. Dans ce cas, seuls les équipements détenant une clé permettant de déchiffrer les messages peuvent accéder au contenu des messages. Or le procédé permet qu'un équipement terminal applique un marquage, par exemple en modifiant un paramètre de marquage, par exemple dans une partie non chiffrée du paquet comprenant les messages, pour que le dispositif puisse appliquer un traitement ne requérant ni l'accès au contenu du paquet, ni la modification du paquet.

Selon un autre aspect du procédé de discrimination, le paquet d'information est un paquet d'un protocole sécurisé de multiplexage de flux.

Les protocoles sécurisés de multiplexage de flux, tels que QUIC, HTTP2 ou HTTP3 présentent des avantages pour la mise en œuvre du procédé de discrimination. Par exemple, le protocole QUIC présente beaucoup d'avantages pour les fournisseurs de contenus et les utilisateurs notamment pour ses capacités de multiplexage des messages et sa sécurisation intrinsèque des données d'entêtes. Le procédé peut être avantageusement mis en œuvre par l'ajout des messages dans un paquet QUIC propre à être traité par le dispositif. En effet, ce protocole est de plus en plus largement supporté par les équipements utilisateurs et les serveurs de données et il permet le multiplexage des messages. Le marquage d'un tel paquet QUIC permet au dispositif de rapidement différencier les paquets à traiter des autres acheminés à destination du serveur de données sans traitement.

Selon un autre aspect du procédé de discrimination, le protocole sécurisé de multiplexage de flux est un protocole parmi les protocoles suivants : le protocole MPTCP, le protocole SCTP, le protocole QUIC, le protocole HTTP2, le protocole SPDY, le protocole HTTP3.

Les protocoles QUIC, HTTP2 et HTTP3 sont de plus en plus utilisés pour le transfert des données par les fournisseurs de contenus et les fournisseurs de terminaux. L'utilisation de l'un de ces protocoles présente l'avantage de pouvoir déployer rapidement ce procédé.

Selon un autre aspect du procédé de discrimination, le protocole est le protocole QUIC et l'application du marquage comprend la modification d'éléments binaires parmi un « spin bit » et/ou des « Reserved Bits ».

Le spin bit est un bit de l'en-tête du protocole QUIC. Ce bit peut notamment être utilisé pour un calcul de latence d'une transmission de données entre un émetteur et récepteur. L'utilisation de ce bit, présent dans la spécification du protocole QUIC, et donc supporté par toutes les applications QUIC mais non forcément utilisé, notamment si la latence n'est pas calculée, permet au dispositif de pouvoir rapidement identifier le paquet QUIC à traiter.

L'utilisation des deux bits « Reserved Bits » autorise la possibilité de différencier quatre paquets de gestion de flux, permettant ainsi au dispositif de pouvoir appliquer quatre traitements différenciés à des messages compris dans les paquets de gestions comprenant ces quatre options. L'utilisation des bits « Reserved Bits » en complément du « spin bit » autorise la mise en œuvre de huit traitements différenciés des messages des paquets de gestion de flux. Les termes Spin Bits et Reserved Bits sont associés au protocole QUIC et il est possible d'envisager l'utilisation de bits ayant le même rôle dans n'importe quel protocole sécurisé de multiplexage de flux.

Selon un autre aspect du procédé de discrimination, le paquet d'information comprend un attribut correspondant à une application spécifique.

Le procédé peut être mis en œuvre pour appliquer un traitement à une application spécifique. L'équipement terminal peut ainsi instancier plusieurs paquets de gestion de flux comprenant chacun des messages relatifs à une application spécifique et dont l'application du marquage correspondant ici à un paramètre de marquage modifié est spécifique au paquet de gestion de flux. Le dispositif peut ainsi appliquer un traitement spécifique aux paquets de gestion de flux en fonction du paramètre distinct de chaque paquet.

Selon un autre aspect du procédé de discrimination, l'équipement terminal est un équipement d'accès d'un réseau local acheminant la pluralité de messages en provenance et à destination de terminaux du réseau local.

Le procédé de discrimination peut être avantageusement mis en œuvre par un équipement d'accès d'un réseau local, tel qu'une passerelle d'accès d'un réseau domestique ou un équipement de type TCU d'un réseau véhiculaire. En effet, l'équipement terminal peut discriminer les différentes applications et regrouper les messages de ces différentes applications dans des paquets distincts pour qu'un équipement du réseau acheminant le paquet applique un traitement spécifique en fonction d'un paramètre de marquage du paquet.

Selon un autre aspect, le procédé de discrimination comprend préalablement à l'ajout de l'attribut, une sélection dudit premier message en fonction d'un ou plusieurs critères de la liste:

- la première application est comprise dans une liste d'applications gérée par l'équipement terminal,
- le premier message est reçu d'un terminal dont un identifiant est compris dans une liste d'identifiants gérée par l'équipement terminal,
- le premier message comprend une donnée relative à une qualité de service, ladite donnée étant comprise dans un ensemble de données gérées par le terminal.

Le procédé de discrimination peut être avantageusement mis en œuvre pour un nombre limité d'applications. Par exemple, seules les applications dont les données sont facturées à l'utilisateur sont considérées et les messages de ces applications sont ajoutés au paquet de gestion. Le procédé peut également être instancié pour une liste de terminaux, indépendamment ou pas des applications utilisées par ces terminaux. Une donnée d'un message, par exemple une adresse IP ou bien un champ relatif à la Qualité de Service, peut être également utilisé pour décider d'ajouter le message dans le paquet de gestion ou non, en corrélation avec l'application et/ou le terminal supportant l'application ou non.

Les différents aspects du procédé de discrimination qui viennent d'être décrits peuvent être mis en œuvre indépendamment les uns des autres ou en combinaison les uns avec les autres.

L'invention concerne un procédé de capture d'un paquet d'une session chiffrée établie entre un équipement terminal et un serveur de données selon la revendication 1, son dispositif correspondant selon la revendication 14, et son programme d'ordinateur correspondant selon la revendication 17 ; un procédé de comptage de données relatives à une application émises au sein d'une telle session chiffrée selon la revendication 11, son dispositif correspondant selon la revendication 15 et son programme d'ordinateur correspondant selon la revendication 18. L'invention concerne aussi un système comprenant de tels dispositifs selon la revendication 16. Les revendications dépendantes décrivent des modes de réalisation préférés de l'invention.

La présente divulgation concerne également un procédé de traitement d'un attribut relatif à un premier message concernant une première application, ledit premier message étant émis par un équipement terminal à destination d'un serveur de données, le procédé étant mis en œuvre par un dispositif acheminant le premier message et apte à appliquer un traitement à un attribut relatif au premier message, comprenant

- la détection d'un paquet d'information comprenant l'attribut ajouté par l'équipement terminal, en fonction d'un marquage appliqué au paquet d'information reçu,

- le traitement de l'attribut compris dans le paquet d'information reçu.

Le procédé de traitement permet de pouvoir appliquer un traitement à un paquet regroupant potentiellement plusieurs messages pour lesquels un traitement doit être effectué. Le procédé permet ainsi de pouvoir appliquer un traitement sur la base d'une information présente par exemple dans l'en-tête d'un paquet. Ainsi, si des données utiles du paquet sont chiffrées, le dispositif par lequel des paquets transitent peut néanmoins appliquer un traitement relatif à la qualité de service, au comptage de certains messages parmi l'ensemble des messages transitant par le dispositif sur la base d'un paramètre de marquage d'un paquet regroupant les messages concernés par le traitement à appliquer.

Selon un aspect du procédé de traitement, le traitement comprend le comptage d'au moins une donnée relative à l'application à partir de l'attribut traité.

Dans un environnement où les paquets peuvent être émis par des applications dont les flux sont facturés à des entités distinctes, la modification d'un paramètre de marquage d'un paquet comprenant des messages relatifs à des applications permet de facturer ces paquets à une entité spécifique. Ainsi par exemple, les paquets marqués comprennent des messages à facturer à un gestionnaire de véhicule et sont aisément identifiables pour être comptabilisés par un dispositif intermédiaire.

Selon un aspect de la présente divulgation, le procédé de traitement comprend en outre la réception et l'application d'un traitement relatif à un deuxième message concernant la première application, à partir d'un attribut compris dans un deuxième paquet d'information ayant un marquage appliqué, ledit deuxième paquet d'information étant reçu en provenance du serveur de données et à destination du terminal.

Le procédé de traitement peut avantageusement être mis en œuvre pour les paquets émis par l'équipement terminal et par le serveur de données. Par exemple, dans le cas du comptage des paquets pour une facturation ou bien pour appliquer un traitement spécifique aux paquets, il peut être nécessaire d'appliquer le traitement aux flux bidirectionnels des paquets, émis par l'équipement terminal à destination du serveur ou du serveur de données à destination de l'équipement terminal.

Les différents aspects du procédé de traitement qui viennent d'être décrits peuvent être mis en œuvre indépendamment les uns des autres ou en combinaison les uns avec les autres.

La présente divulgation concerne également un dispositif de discrimination d'un premier message concernant une première application parmi un ensemble de messages concernant une pluralité d'application, émis par un équipement terminal à destination d'un serveur de données par l'intermédiaire d'un dispositif d'acheminement, apte à appliquer un traitement à un attribut relatif au premier message, ledit dispositif comprenant:

- un module de marquage, apte à

  - ajouter un attribut relatif au premier message dans un paquet d'information, ledit paquet regroupant des attributs auxquels le traitement est appliqué,
  - appliquer un marquage du paquet d'information comprenant l'attribut ajouté,

- un émetteur, apte à émettre le paquet d'information comprenant le marquage appliqué à destination du serveur de données.

Ce dispositif, apte à mettre en œuvre dans tous ses modes de réalisation le procédé de discrimination qui vient d'être décrit, est destiné à être mis en œuvre dans un dispositif d'un réseau de communication tel qu'un équipement d'accès d'un réseau local, tel qu'une passerelle domestique, un terminal ou un équipement de type routeur.

La présente divulgation concerne également un dispositif de traitement d'un attribut relatif à un premier message concernant une première application, ledit premier message étant émis par un équipement terminal à destination d'un serveur de données, apte à appliquer un traitement à un attribut relatif au premier message, comprenant

- un détecteur, apte à détecter un paquet d'information comprenant l'attribut ajouté par l'équipement terminal, en fonction d'un marquage appliqué au paquet d'information reçu,
- un module de traitement, apte à traiter l'attribut compris dans le paquet d'information reçu.

Ce dispositif, apte à mettre en œuvre dans tous ses modes de réalisation le procédé de traitement qui vient d'être décrit, est destiné à être mis en œuvre dans un dispositif d'un réseau de communication tel qu'un routeur, un pare-feu, un équipement d'inspection de flux (en anglais Deep Packet Inspection), ou bien encore un serveur de données. La présente divulgation concerne en outre un système de traitement d'un attribut relatif à un premier message concernant une première application, ledit premier message étant émis par un équipement terminal à destination d'un serveur de données, comprenant au moins un dispositif de discrimination, et au moins un dispositif de traitement.

La présente divulgation concerne aussi des programmes d'ordinateur comprenant des instructions pour la mise en œuvre des étapes des procédés respectifs de discrimination et de traitement qui viennent d'être décrits, lorsque ces programmes sont l'un et l'autre exécutés par un processeur et un support d'enregistrement lisible respectivement par un dispositif de discrimination et de traitement sur lesquels sont enregistrés les programmes d'ordinateurs.

La situation est outre améliorée à l'aide d'un procédé de capture d'un paquet d'une session chiffrée établie entre un équipement terminal et un serveur de données, ledit paquet comprenant une donnée de détermination d'une clé de sécurité utilisée pour le chiffrement du paquet, le procédé étant mis en œuvre par un dispositif acheminant le paquet entre l'équipement terminal et le serveur de données et comprenant :

- analyse d'une pluralité de paquets émis par l'équipement terminal et destinés au serveur,
- identification d'un paquet de coopération parmi la pluralité de paquets analysés, ledit paquet de coopération comprenant la donnée de détermination correspondant à une clé de sécurité utilisée pour le chiffrement de paquets émis par l'équipement terminal à destination du serveur de données préalablement à l'envoi par l'équipement terminal dudit paquet de coopération,
- déchiffrement du paquet de coopération reçu à l'aide d'une clé de sécurité correspondant à la donnée de détermination du paquet de coopération identifié.

Lorsqu'une connexion entre un équipement terminal et un serveur de données est sécurisée, et notamment chiffrée, il n'est pas possible pour un dispositif assurant l'acheminement des données de pouvoir accéder au contenu des paquets échangés entre l'équipement et le serveur. Une option pour corriger cela est de fournir au dispositif les clés de sécurité utilisées par l'équipement terminal et le serveur de données. Mais cette fourniture a pour conséquence de provoquer une faille de sécurité dans les échanges de données et requiert de systématiquement transmettre les clés au dispositif, ce qui représente un problème de sécurité. Hors, dans certains cas, le dispositif doit pouvoir appliquer un traitement spécifique à certains paquets, ce traitement pouvant être de facturer spécifiquement certaines applications ou de transmettre certaines données à une autorité de régulation. Le procédé permet ainsi que parmi l'ensemble des paquets acheminés par le dispositif, l'équipement terminal puisse insérer un paquet de coopération et à indiquer par une donnée de détermination présente dans le paquet, par exemple un ou plusieurs bits positionnés à une certaine valeur identifiable par le dispositif typiquement dans l'en-tête du paquet, que ce paquet est un paquet de coopération à déchiffrer avec une clé qui est déterminée par la donnée de détermination d'une certaine valeur. Le procédé permet ainsi avantageusement de mettre en œuvre une collaboration entre l'équipement terminal et le dispositif acheminant les données pour permettre au dispositif d'appliquer un traitement à des données de coopération transmises par l'équipement terminal. Le procédé permet en outre de pouvoir réutiliser une clé de sécurité, qui n'est plus utilisée pour le transport des données entre l'équipement terminal et le serveur de données, pour la collaboration entre l'équipement terminal et le dispositif. Le dispositif peut être un routeur, un équipement pare-feu ou tout autre équipement assurant un traitement des données de la session. Notamment, le serveur de données peut mettre en œuvre les actions décrites pour le dispositif. Dans ce cas, le serveur de données reçoit le paquet de coopération et le traite à l'aide de la clé de sécurité correspondant à la donnée de détermination. Le chiffrement et le déchiffrement comprend tous les modes de protection des données pouvant être utilisés pour assurer la confidentialité des paquets échangés et notamment les techniques de sécurisation quantum ou homographique notamment.

Selon un aspect du procédé de capture, la donnée de détermination est un élément binaire de phase indiquant un changement de clé à utiliser par le terminal et le serveur de données pour le chiffrement et le déchiffrement de paquets échangés entre l'équipement terminal et le serveur de données.

Il est connu qu'un bit de phase est par exemple utilisé dans des protocoles pour qu'une extrémité de la session indique à l'autre extrémité un changement de la clé de sécurité pour les données échangées ensuite. Dans le cas où un tel bit était positionné à 0 et qu'une extrémité, telle que l'équipement terminal, le passe à 1 pour les données transmises à partir de ce moment au serveur de données, le serveur de données va déchiffrer les données reçues avec la clé correspondant au bit 1, correspondant à un changement de phase. Dans ce cas, la clé correspondant au bit 0 n'est plus utilisée pour le chiffrement et le déchiffrement des données échangées entre l'équipement terminal et le serveur de données et pourra être utilisé pour le chiffrement du paquet de coopération transmis au dispositif par l'équipement terminal, conformément à l'élément binaire de phase.

Selon un aspect du procédé de capture, le paquet de coopération est un paquet d'un protocole sécurisé de multiplexage de données, tel que le protocole QUIC, et l'identification du paquet de coopération est réalisée à partir d'un ou plusieurs des paramètres suivants :

- Bit de phase
- Valeur du bit spinbit du paquet QUIC
- Valeur des bits RR du paquet QUIC
- Identifiant de connexion

L'équipement terminal peut transmettre différentes informations au dispositif, possiblement en chiffrant les différentes informations avec la clé de sécurité associé à la valeur de l'élément binaire de détermination. L'utilisation d'un identifiant de connexion négocié préalablement entre l'équipement terminal et le dispositif, par exemple lors de l'échange d'une clé de chiffrement/déchiffrement ou par un échange de messages spécifiques est avantageux. Cela permet en effet que seuls les deux équipements, à savoir l'équipement terminal et le dispositif, aient connaissance de cette information. L'utilisation du bit spinbit et/ou des bits RR du paquet QUIC peut se substituer à l'identifiant de connexion utilisé ou bien encore le compléter afin d'enrichir la signalisation transmise au dispositif et de lui indiquer explicitement qu'il s'agit d'un paquet de coopération requérant un traitement par le dispositif.

Selon un aspect du procédé de capture, l'identification du paquet de coopération fait suite à l'activation dans le dispositif d'une détection des paquets dont la donnée de détermination à une valeur distincte de la donnée de détermination d'une pluralité de paquets successifs préalablement reçus en provenance de l'équipement terminal.

Le dispositif peut activer en permanence la détection de la réception de paquets de coopération ou bien il peut activer cette détection en fonction d'un événement, réduisant ainsi l'obligation pour le dispositif d'utiliser des ressources pour l'activation et le traitement du paquet suite à la détection d'un paquet ayant l'élément binaire de détermination à 0. L'activation peut être mise en œuvre suite à la réception par le dispositif d'un message d'activation transmis par l'équipement terminal, indiquant ainsi au dispositif qu'il va recevoir un paquet de coopération dans les secondes suivantes. L'activation peut aussi être mise en œuvre si le dispositif reçoit successivement plusieurs paquets ayant la donnée de détermination à une certaine valeur, par exemple positionné à 1, indiquant ainsi au dispositif que la clé de chiffrement correspondant à la valeur 0 n'est plus utilisée pour le chiffrement des données transmises au serveur de données mais pourra être utilisée pour l'envoi d'un paquet de coopération, permettant de réutiliser une clé de chiffrement désuète pour le chiffrement des données vers le serveur de données. Ainsi après avoir reçu plusieurs paquets successifs avec une valeur de la donnée de détermination à 1 par exemple, la réception d'un paquet avec une valeur à 0 peut indiquer au dispositif qu'il s'agit d'un paquet de coopération.

Selon un aspect du procédé de capture, la clé de sécurité associée à la donnée de détermination est émise par l'équipement terminal à destination du dispositif après la fin de la session entre l'équipement terminal et le serveur de données.

Selon ce mode de réalisation, la clé de sécurité correspondant par exemple à un élément binaire de détermination est transmise suite à l'envoi du paquet de coopération par l'équipement terminal et après la fin de la session entre l'équipement terminal et le serveur de données. Cela permet de s'assurer que la clé de sécurité ne puisse pas être utilisée pour un autre usage, par exemple pour déchiffrer un paquet de données émis alors que la session est encore établie. Le dispositif sauvegarde le paquet de coopération et le déchiffre à l'aide la clé transmise une fois la session terminée à l'aide de la clé de chiffrement transmise par l'équipement terminal après la fermeture de la session.

Selon un aspect du procédé de capture, la clé de sécurité associée à la donnée de détermination était utilisée pour la sécurisation d'un échange de paquets d'une session précédente entre l'équipement terminal et le serveur de données.

Certains protocoles, tels que QUIC ou TLS, prévoient un changement à certains moments des clés de chiffrement utilisés pour chiffrer les données échangées lors de sessions. L'équipement terminal et le serveur de données dérivent ainsi par exemple une clé de chiffrement pour les nouveaux échanges sur la base d'une clé précédemment utilisée pour des échanges d'une session antérieure. La clé utilisée pour les échanges d'une session précédente n'est ainsi plus utilisée pour dériver des clés pour des échanges ultérieurs de données et peut être avantageusement utilisée pour le chiffrement et l'envoi du paquet de coopération transmis par l'équipement terminal à destination du dispositif.

Selon un aspect du procédé de capture, la clé de sécurité associée à la donnée de détermination est une clé négociée entre l'équipement terminal et le serveur de données lors d'une étape d'initialisation de la session.

Lors d'une phase d'établissement de session, telle qu'une phase de Handshake, une clé de sécurité aussi appelée « cooperation secret » peut être négociée par l'équipement terminal et le serveur de données. C'est notamment le cas lorsqu'aucune session entre l'équipement terminal et le serveur de données n'existait avant cet établissement de session. Cette clé de sécurité (qui peut être une coopération secret) peut être avantageusement utilisée pour le chiffrement et le déchiffrement du paquet de coopération.

Selon un aspect du procédé de capture, le paquet de coopération est retiré de la pluralité de paquets lors de l'acheminement de ladite pluralité vers le serveur de données.

Dans un mode de réalisation, le paquet de coopération est retiré de pluralité de paquets envoyés par l'équipement terminal dans la session établie avec le serveur de données. Notamment dans le cas d'une session unidirectionnelle entre l'équipement terminal et le serveur de données, le paquet de coopération destiné au dispositif n'a pas d'intérêt pour le serveur de données. Son retrait peut éviter en outre un dysfonctionnement du serveur de données qui n'est pas censé recevoir un paquet comprenant un élément binaire de détermination correspondant à une clé de chiffrement qui n'est normalement plus utilisée pour le chiffrement des paquets entre l'équipement terminal et le serveur de données.

Selon un aspect, le procédé de capture comprend en outre l'analyse, l'identification d'un paquet de coopération et le déchiffrement du paquet de coopération tels que définis ci-dessus, parmi des paquets émis par le serveur de données à destination de l'équipement terminal.

Notamment dans le cas d'une session bi-directionnelle entre l'équipement terminal et le serveur de données, le dispositif peut appliquer un traitement, par exemple une opération de comptage, pour les paquets reçus de l'équipement terminal mais aussi du serveur de données. Dans ce cas, le procédé mis en œuvre sera identique au procédé appliqué pour les paquets reçus de l'équipement terminal et le dispositif pourra en outre ne pas retirer le paquet de coopération des paquets émis à destination du serveur de données pour que celui-ci prenne en compte l'existence du paquet de coopération pour lui-même positionner un élément binaire du paquet de coopération émis vers le dispositif.

Les différents aspects du procédé de capture qui viennent d'être décrits peuvent être mis en œuvre indépendamment les uns des autres ou en combinaison les uns avec les autres.

La présente divulgation concerne également un procédé de comptage de données relatives à une application émises par un équipement terminal vers un serveur de données par l'intermédiaire d'un dispositif, à l'aide d'une session chiffrée entre l'équipement terminal et le serveur, le procédé étant mis en œuvre par l'équipement terminal et comprenant

- l'émission d'une pluralité de paquets comprenant chacun une donnée de détermination d'une clé de sécurité utilisée pour le chiffrement du paquet,
- l'incrémentation d'un compteur des données relatives à l'application, par exemple émises à destination du serveur de données,
- l'ajout du compteur incrémenté dans un paquet de coopération comprenant la donnée de détermination correspondant à une clé de sécurité utilisée pour le chiffrement de paquets de la pluralité échangés entre l'équipement terminal et le serveur de données préalablement à l'envoi dudit paquet de coopération,
- l'envoi du paquet de coopération comprenant le compteur ajouté à destination du serveur de données.

Le procédé de comptage mis en œuvre par l'équipement terminal permet au dispositif d'avoir une information sur le volume de données échangé, dans une liaison unidirectionnelle ou bidirectionnelle entre l'équipement terminal et le serveur de données, pour une application donnée. Ce procédé permet ainsi de remédier au problème d'accès aux données chiffrées des paquets par le dispositif. Ce procédé permet ainsi à l'utilisateur de transmettre au dispositif de façon sécurisée, en réutilisant possiblement une clé de sécurité préalablement utilisée pour les paquets de la session, des informations de comptage via un compteur incrémenté pour chaque paquet relatif à une application donnée. Ainsi le dispositif pourra ensuite appliquer un traitement, telle qu'une facturation, aux entités en charge du paiement pour les paquets des applications respectives transmis et possiblement reçus par l'équipement terminal. Selon un aspect de l'invention, le procédé de comptage comprend en outre l'envoi au dispositif d'une clé de sécurité correspondant à la donnée de détermination du paquet de coopération.

Sachant que la clé de sécurité correspondant à l'élément binaire de détermination n'est dans la plupart des cas pas connue par le dispositif, l'équipement terminal peut transmettre cette clé, par exemple une fois la session entre l'équipement terminal et le serveur de données terminée, pour que le dispositif puisse effectivement accéder au contenu du paquet de coopération.

Selon un aspect, le procédé de comptage comprend en outre l'envoi préalable d'un message d'activation du procédé de capture par le dispositif à destination du serveur de données.

Notamment lorsque la session entre l'équipement terminal et le serveur de données est bidirectionnelle, il peut être nécessaire que l'équipement terminal transmette au serveur de données un message d'activation du procédé de capture, indiquant ainsi au serveur de données qu'il est susceptible de recevoir un paquet comprenant un élément binaire correspondant à une clé de sécurité qui n'est plus utilisée. Ce message d'activation pourra en outre indiquer au serveur de données qu'il active lui-même le procédé de comptage correspondant au procédé de marquage mis en œuvre par l'équipement terminal pour les paquets qu'il émet à destination de l'équipement terminal.

Les différents aspects du procédé de comptage qui viennent d'être décrits peuvent être mis en œuvre indépendamment les uns des autres ou en combinaison les uns avec les autres.

La présente divulgation concerne en outre un dispositif de capture d'un paquet d'une session chiffrée établie entre un équipement terminal et un serveur de données, ledit paquet comprenant une donnée de détermination d'une clé de sécurité utilisée pour le chiffrement du paquet, comprenant :

- un analyseur, apte à analyser une pluralité de paquets émis par l'équipement terminal et destinés au serveur,
- un module d'identification, apte à identifier un paquet de coopération parmi la pluralité de paquets analysés, ledit paquet de coopération comprenant la donnée de détermination correspondant à une clé de sécurité utilisée pour le chiffrement de paquets émis par l'équipement terminal à destination du serveur de données préalablement à l'envoi par l'équipement terminal dudit paquet de coopération,
- un module de déchiffrement, apte à déchiffrer le paquet de coopération reçu à l'aide d'une clé de sécurité correspondant à la donnée de détermination du paquet de coopération identifié.

Ce dispositif, apte à mettre en œuvre dans tous ses modes de réalisation le procédé de capture qui vient d'être décrit, est destiné à être mis en œuvre dans un dispositif d'un réseau de communication tel qu'un routeur, un pare-feu, un équipement d'inspection de flux (en anglais Deep Packet Inspection), ou bien encore un serveur de données.

La présente divulgation concerne en outre un dispositif de comptage de données relatives à une application émises par un équipement terminal vers un serveur de données par l'intermédiaire d'un dispositif, à l'aide d'une session chiffrée entre l'équipement terminal et le serveur, comprenant

- un émetteur, apte à émettre une pluralité de paquets comprenant chacun une donnée de détermination d'une clé de sécurité utilisée pour le chiffrement du paquet,
- un calculateur, apte à incrémenter un compteur des données relatives à l'application, et apte à ajouter le compteur incrémenté dans un paquet de coopération comprenant la donnée de détermination correspondant à une clé de sécurité utilisée pour le chiffrement de paquets de la pluralité échangés entre l'équipement terminal et le serveur de données préalablement à l'envoi dudit paquet de coopération,
- un émetteur, apte à émettre le paquet de coopération comprenant le compteur ajouté à destination du serveur de données.

Ce dispositif, apte à mettre en œuvre dans tous ses modes de réalisation le procédé de comptage qui vient d'être décrit, est destiné à être mis en œuvre dans un dispositif d'un réseau de communication tel qu'un équipement d'accès d'un réseau local, tel qu'une passerelle domestique, un terminal ou un équipement de type routeur.

La présente divulgation concerne en outre un système de comptage de données relatives à une application émises par un équipement terminal vers un serveur de données par l'intermédiaire d'un dispositif, à l'aide d'une session chiffrée entre l'équipement terminal et le serveur comprenant au moins un dispositif de capture et au moins un dispositif de comptage.

La présente divulgation concerne aussi des programmes d'ordinateur comprenant des instructions pour la mise en œuvre des étapes des procédés respectifs de capture et de comptage qui viennent d'être décrits, lorsque ces programmes sont l'un et l'autre exécutés par un processeur et un support d'enregistrement lisible respectivement par un dispositif de capture et de comptage sur lesquels sont enregistrés les programmes d'ordinateurs.

Les programmes revendiqués peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Les supports d'informations utilisés peuvent être n'importe quelle entité ou dispositif capable de stocker le programme. Par exemple, un support peut comporter un moyen de stockage, tel qu'une ROM, par exemple un CD ROM ou une ROM de circuit microélectronique, ou encore un moyen d'enregistrement magnétique.

Un tel moyen de stockage peut par exemple être un disque dur, une mémoire flash, etc. D'autre part, un support d'informations peut être un support transmissible tel qu'un signal électrique ou optique, qui peut être acheminé via un câble électrique ou optique, par radio ou par d'autres moyens. Un programme selon l'invention peut être en particulier téléchargé sur un réseau de type Internet.

Alternativement, un support d'informations peut être un circuit intégré dans lequel un programme est incorporé, le circuit étant adapté pour exécuter ou pour être utilisé dans l'exécution des procédés en question.

## 4. Brève description des dessins

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :

[Fig 1] présente une mise en œuvre du procédé de discrimination selon un premier aspect de l'invention,
[Fig 2] présente une mise en œuvre du procédé de capture d'un paquet selon un mode de réalisation de l'invention,
[Fig 3] présente une mise en œuvre du procédé de discrimination selon un mode de réalisation de l'invention,
[Fig 4] présente une mise en œuvre du procédé de discrimination selon un autre mode de réalisation de l'invention,
[Fig 5] présente une mise en œuvre du procédé de comptage selon un mode de réalisation de l'invention,
[Fig 6] présente une mise en œuvre du procédé de comptage selon un autre mode de réalisation de l'invention,
[Fig 7] présente un dispositif de discrimination selon un mode de réalisation de l'invention.
[Fig 8] présente un dispositif de traitement selon un mode de réalisation de l'invention.
[Fig 9] présente un dispositif de capture selon un mode de réalisation de l'invention.
[Fig 10] présente un dispositif de comptage selon un mode de réalisation de l'invention.

**5. Description des modes de réalisation**

Dans la suite de la description, on présente des modes de réalisation de l'invention dans une infrastructure de communication. Cette infrastructure peut être mise en œuvre pour acheminer des données de communications à destination de terminaux fixes ou mobiles et l'infrastructure, déployée à partir d'équipements spécifiques ou de fonctions virtualisées, peut être destinée à acheminer et traiter des données de clientèle résidentielle ou d'entreprise.

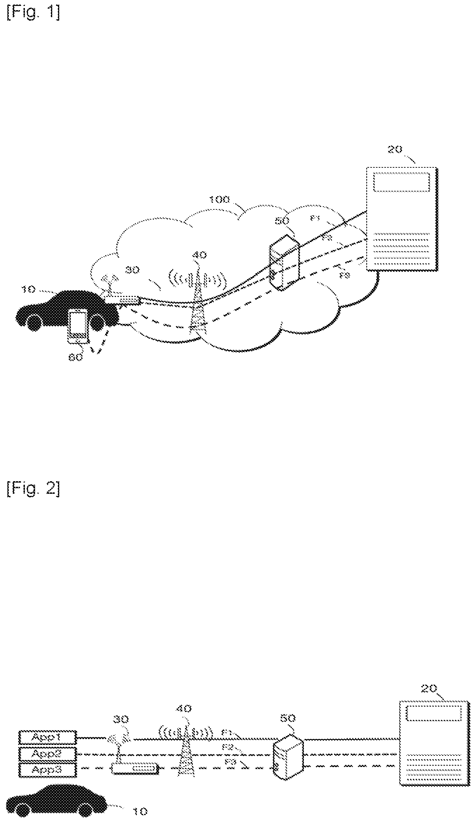

On se réfère tout d'abord à la [Fig 1] qui présente une mise en œuvre d'un procédé de discrimination selon un premier aspect de l'invention. Selon ce premier aspect, un équipement terminal 30 transmet plusieurs messages F1, F2, F3 à destination d'un serveur 20 de données. Ces messages F1, F2, F3 sont acheminés dans un réseau 100 comprenant notamment un équipement d'accès 40 et un dispositif 50 acheminant les messages échangés entre l'équipement terminal 30 et le serveur 20 de données. Les messages F1, F2, F3 transmis par l'équipement terminal 20 peuvent être émis par l'équipement terminal 30 ou bien émis par un autre terminal, tel que le terminal 60, et acheminé par l'équipement terminal 30 vers le serveur 20 de données via l'équipement d'accès 40 assurant la connexion de l'équipement terminal 30 au réseau 100 et le dispositif 50. Selon cet aspect, l'équipement terminal 30 est un équipement de type TCU d'un véhicule 10 émettant les messages F1 et F2 et le terminal 60 est par exemple un smartphone d'un occupant du véhicule émettant les messages F3. Les différents messages F1, F2, F3 peuvent requérir un traitement particulier par le dispositif 50 et donc la possibilité de pouvoir discriminer les différents messages. Par exemple, sachant que la transmission des messages F1, F2, F3 peuvent être facturés à des entités distinctes, il est nécessaire de pouvoir effectivement comptabiliser le nombre de messages F1 et/ou F2 et/ou F3. Hors, selon les techniques de l'art antérieur, il peut être difficile pour le dispositif 50 d'accéder au contenu des messages F1, F2, F3 car ils peuvent être notamment chiffrés. Selon cet aspect, sachant que les messages F3 doivent être facturés à l'occupant du véhicule 10, les messages F3 relatives à une application utilisée par l'occupant sont intégrés dans un paquet d'information et émis par le TCU 30 à destination du serveur de données. Pour que le dispositif 50 puisse facilement identifier le paquet d'information, l'équipement terminal applique un marquage, par exemple en modifiant des éléments d'information de l'en-tête non chiffrée du paquet, pour que le dispositif 40 puisse facilement l'identifier et traiter parmi les différents messages F1, F2, F3 qu'il doit acheminer. Le message F3 ajouté peut correspondre aux données de l'application ou bien à des données propres au traitement par le dispositif 50. Par exemple, le message F3 peut correspondre au volume de données échangé entre le terminal 60 et le serveur 20 de données. Ainsi, l'équipement terminal 30, qui peut effectivement intervenir sur les messages qu'il émet lui-même ou pour le compte de terminaux tels que le terminal 60, collabore avec le dispositif en lui transmettant des paquets d'information pouvant être traités par le dispositif 50. L'équipement d'accès 40 peut également jouer le rôle du dispositif 50 et l'équipement terminal 30 peut être également être une passerelle résidentielle, aussi appelée box, ou bien un équipement de type smartphone. Le paquet d'information comprenant les messages F3 peut en outre être chiffré à l'aide d'une clé de chiffrement et le dispositif 50 peut alors déchiffrer le paquet d'information reçu de l'équipement terminal 30 à l'aide d'une clé de déchiffrement correspondante à la clé de chiffrement utilisée pour le chiffrement. Il est à noter que si des messages relatifs à des applications distinctes requièrent un traitement de la part du dispositif 50, alors l'équipement terminal 30 peut inclure dans le paquet d'information les messages relatifs aux deux applications, en différenciant par exemple les différents messages par le marquage appliqué au paquet. Ainsi le marquage pourra comprendre un marquage propre à une application. Par exemple, si des messages F4 non représentés sur la [Fig. 1] sont émis par le terminal 60 à destination du serveur 20 de données, l'équipement terminal pourra insérer les messages F3 et F4 dans un paquet d'information que le dispositif 50 pourra traiter conformément au marquage appliqué par l'équipement utilisateur 30.

En relation avec la [Fig 2], une mise en œuvre d'un procédé de capture d'un paquet selon un mode de réalisation de l'invention est présentée. Les entités 10, 20, 30, 40, 50 représentées sur cette [Fig 2] sont identiques aux entités 10, 20, 30, 40, 50 représentées dans la [Fig 1]. Dans cette [Fig 2] trois applications App1, App2, App3 sont représentées. Ces applications App1, App2, App3 peuvent être utilisées ou activées sur l'équipement terminal 30 ou sur un terminal, tel que le terminal 60 représenté dans la [Fig 1]. Le dispositif 50, comme l'équipement d'accès 40, achemine les paquets relatifs aux applications App1, App2, App3 émis par l'équipement terminal 30 vers le serveur de données 20 ainsi que les paquets émis par le serveur de données 20 vers l'équipement terminal 30. Une session chiffrée est établie entre l'équipement terminal 30 et le serveur de données 20 pour l'acheminement des paquets. Une ou plusieurs sessions chiffrées, par exemple une par application App1, App2 et App3 ou une session pour l'ensemble des applications App1, App2 et App3 peut être mise en œuvre. Les paquets échangés entre l'équipement terminal 30 et le serveur de données 20 comprennent une donnée de détermination d'une clé de sécurité utilisée pour le chiffrement des paquets. Par exemple, il peut s'agir d'un ou plusieurs bits permettant à l'équipement terminal 30 et le serveur de données 20 de se mettre d'accord sur la clé de sécurité à utiliser pour le chiffrement et le déchiffrement des données et à indiquer la clé ou un changement de clé par une information fournie par une donnée de détermination, par exemple présente dans l'en-tête non chiffrée du paquet. Le dispositif 50, acheminant les différents paquets échangés entre l'équipement terminal 30 et le serveur 20 de données, analyse ces paquets et plus particulièrement analyse les données de détermination des clés des paquets. Une suite de paquets relatifs à l'application App1 sont chiffrés avec une clé de chiffrement, par exemple une clé privée, et la donnée de détermination correspondant à cette clé a une valeur v1. Le dispositif 50, analysant ces données et vérifiant que la valeur de la donnée est inchangée transmet ces paquets à destination du serveur de données. Puis, le dispositif reçoit un paquet ayant une donnée de détermination ayant une valeur v0 qui avait été utilisée pour l'échange de paquets d'une connexion précédente de la session ou pour l'envoi de paquets lors d'une phase de protection précédente pour une même connexion. Cette valeur v0 de donnée de détermination est censée ne plus être utilisée pour les échanges de paquets entre l'équipement terminal 30 et le serveur de données puisque l'ensemble des paquets comprennent la valeur v1 comme donnée de détermination. Le dispositif 50 détermine qu'il s'agit d'un paquet de coopération, comprenant des données qui lui sont destinées, et déchiffre le contenu du paquet avec une clé de déchiffrement correspondant à la valeur v0, cette clé n'étant plus utilisée pour l'échange des données entre l'équipement terminal 30 et le serveur 20 de données. Ainsi, une clé de chiffrement précédemment utilisée pour l'échange de paquets entre l'équipement terminal 30 et le serveur 20 de données peut être réutilisée pour transmettre des informations au dispositif 50 dans un paquet chiffré avec la clé réutilisée. Ceci n'altère pas la sécurité de bout en bout entre l'équipement terminal 30 et le serveur 20 de données puisque la clé utilisée pour chiffrer le paquet de coopération transmis par l'équipement terminal 30 (ou le serveur 20 de données) au dispositif 50 est une clé qui n'est plus utilisée pour le chiffrement des paquets échangés entre l'équipement terminal 30 et le serveur 20 de données. La clé de sécurité associée à la donnée de détermination dont la valeur est v0 peut être fournie au dispositif 50 préalablement à l'envoi du paquet de coopération ou postérieurement, le dispositif 50 pouvant mémoriser le paquet de coopération pour le déchiffrer une fois la clé reçue. L'équipement utilisateur peut ainsi mettre en œuvre un procédé de comptage permettant d'informer le dispositif 50 sur le nombre de paquets ou le volume de données ou une information sur une durée de session dans un paquet de coopération comprenant un compteur incrémenté pour chaque paquet transmis, le compteur pouvant correspondre au nombre de paquets émis, à un volume de données incrémenté pour chaque paquet émis, ou à une durée incrémentée dès qu'un nouveau paquet est émis. Le dispositif 50 peut ainsi exploiter l'information du compteur comprise dans le paquet de coopération déchiffré à l'aide de la clé correspondant à la donnée de détermination du paquet de coopération.

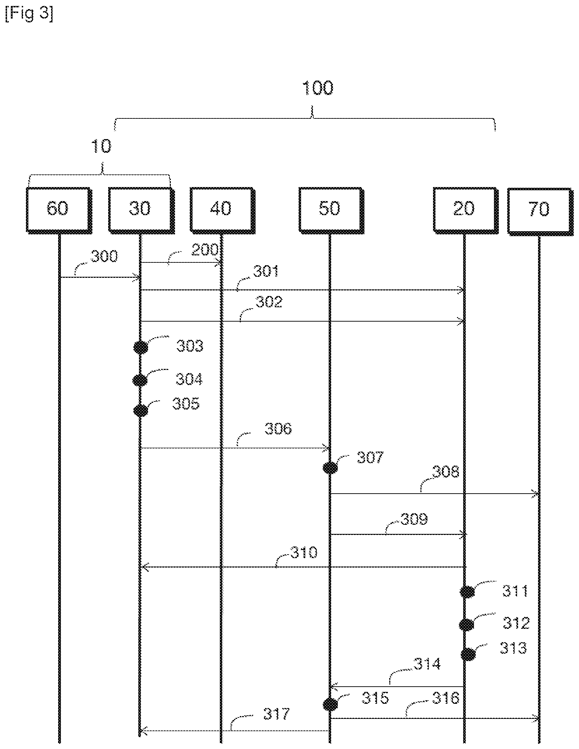

On se réfère maintenant à la [Fig 3] qui présente une mise en œuvre du procédé de discrimination selon un mode de réalisation de l'invention. Les entités 10, 20, 30, 40, 50, 60 et 100 sont équivalentes aux entités ayant les mêmes intitulés dans les [Fig 1] et [Fig 2]. En particulier, selon une alternative, l'équipement terminal 30 est un équipement d'accès d'un réseau local, tel qu'une passerelle résidentielle ou un équipement d'accès d'un réseau véhiculaire tel qu'un TCU. Lors d'une étape 200, l'équipement terminal 30 s'attache et se connecte à l'équipement d'accès 40. Il est considéré qu'une session est établie entre l'équipement terminal 30 et le serveur 20 de données. Selon une alternative, la session peut être établie par une connexion sécurisée entre l'équipement terminal 30 et le serveur 20 de données. Lors d'une étape 300, le smartphone 60 émet un message relatif à une application App1, par exemple de jeu en réseau, et destiné au serveur 20 de données à destination de l'équipement terminal 30 et ce dernier transmet ce message au serveur 20 de données lors d'une étape 301. Lors d'une étape 302, l'équipement terminal 30 transmet un message relatif à une application App2, par exemple de gestion du véhicule 10, au serveur 20 de données. Les 2 messages requièrent de la part du dispositif 50 d'acheminement un traitement différencié, le message relatif à l'application App2 devant être sauvegardé par le dispositif 50, notamment en cas d'audit pour une assurance. L'équipement d'accès 40 et le dispositif 50 acheminent les différents messages émis lors des étapes 301 et 302 vers le serveur 20 de données. L'équipement terminal 30 détient une liste d'applications pour lesquelles une action particulière doit être menée. Par exemple, pour l'application App2 il doit émettre un message lié à cette application au dispositif 50. Selon un autre exemple, l'équipement terminal 30 identifie les messages en fonction du terminal émettant ces messages ou bien encore en fonction d'une information, par exemple relative à la qualité de service, dans le message lui-même. Selon cet exemple, l'équipement terminal doit copier un attribut relatif au message dans un paquet d'information destiné au dispositif 50.

Selon un exemple, lors d'une étape 303 facultative, l'équipement terminal 30 sélectionne un message parmi l'ensemble des messages à transmettre au serveur 20 de données en fonction d'un critère. Par exemple, l'équipement terminal peut comparer l'application concernée par le message émis. Selon l'exemple, retenu les messages relatifs à l'application App2 doivent donner lieu à un traitement spécifique par le dispositif 50. Selon un autre exemple, l'équipement terminal 30 pourra transmettre au dispositif 50 des attributs relatifs à des messages émis par un terminal en particulier, par exemple en provenance du terminal 60. Selon encore un autre exemple, l'équipement terminal 30 pourra transmettre des attributs relatifs à des messages comprenant une information spécifique d'acheminement, de protocole ou encore de qualité de service voire de sécurité. Ainsi, tous les messages requérant une qualité d'acheminement spécifique pourront donner lieu à la fourniture d'un attribut relatif à l'instant où l'équipement terminal 30 a émis les messages pour que le dispositif 50 puisse vérifier que les messages concernés ont bien été acheminés en respectant le critère de qualité de service indiqué dans les messages, ou encore que leur répartition temporelle correspond au type de l'application attendue (en utilisant une technique Shallow packet Inspection).

Lors d'une étape 304, l'équipement terminal 30 ajoute le message, selon un exemple, dans un paquet d'information. Plusieurs attributs de messages distincts pourront être regroupés dans le paquet d'information pour limiter le nombre de paquets d'information transmis. Selon une alternative, l'attribut relatif au message, qui a été ajouté peut correspondre à une partie du message émis ou bien à une ou plusieurs informations relatives à l'application App2 telles que : le nombre de messages, la durée de la session entre l'équipement terminal 30 et le serveur 20 de données pour l'application App2, l'identifiant du terminal ayant émis les messages relatifs à l'application App2.

Le paquet d'information, selon une alternative, peut comprendre des attributs de messages propres à une seule application, par exemple si le paquet d'information ne comprend que des attributs relatifs à l'application App2. Mais dans le cas où un même traitement doit être appliqué à des messages d'applications différentes, il peut être avantageux de regrouper des attributs de messages relatifs à des applications distinctes mais requérant un traitement identique par le dispositif dans un même paquet d'information. Par exemple, si le traitement consiste à compter les paquets émis et relatifs à deux applications App4 et App5, facturés à une même entités, des attributs tels que des compteurs de messages relatifs aux applications App4 et App5 pourront être transmis dans un paquet d'information. L'équipement terminal 30 applique ensuite lors d'une étape 305 un marquage du paquet d'information, par exemple en positionnant certains éléments binaires du paquet d'information à une valeur définie. Selon un exemple, le paquet d'information peut être un paquet d'un protocole sécurisé de multiplexage de flux. Ce type de protocole, proposant une sécurisation intégrée et la possibilité de multiplexer plusieurs flux est particulièrement intéressant. En effet, dans le cas où l'équipement terminal 30 souhaite transmettre plusieurs paquets d'information, chaque paquet regroupant des attributs de messages requérant un traitement spécifique, il est alors possible de transmettre les paquets d'information de façon sécurisée et en multiplexant les différents paquets d'information au sein d'une connexion unique entre l'équipement terminal 30 et le dispositif 50. Selon un exemple, le protocole sécurisé de multiplexage de flux peut être le protocole QUIC ou bien encore le protocole HTTP2 ou HTTP3. Le protocole QUIC présente en particulier l'avantage de comprendre les bits Spin-Bit et Reserved Bits pouvant être utilisé pour appliquer un marquage au paquet d'information. Des éléments binaires d'autres protocoles sécurisés de multiplexage de flux, tels que le Spin-Bit ou les bits Reserved Bits du protocole QUIC, peuvent être indifféremment exploités pour appliquer un marquage au paquet d'information.

Lors d'une étape 306, l'équipement terminal 30 émet le paquet d'information comprenant un ou plusieurs attributs des messages relatifs à l'application App2. Dans ce mode de réalisation, il est considéré que le paquet d'information comprend les messages émis par l'équipement terminal 30 pendant une durée de 300 secondes. Ce paquet d'information transmis en utilisant le protocole QUIC comprend en outre les bits Spin-Bit et Reserved Bits positionné à 1. L'information de marquage, permettant de différencier le paquet d'information reçu d'autres paquets, indique au dispositif 50 qu'il s'agit d'un paquet d'information et qu'un traitement doit être appliqué au paquet d'information en utilisant les attributs de messages présents dans le paquet d'information reçu lors de l'étape 306. Lors d'une étape 307, le dispositif 50 transmet à une entité 70 de sauvegarde, un message comprenant les attributs de messages reçus lors de l'étape 307 et permettant ainsi de conserver un historique des messages relatifs à l'application App2 transmis par l'équipement terminal 30. Selon une alternative, le paquet d'information est transmis au serveur 20 de données lors d'une étape 309. Cela peut notamment être le cas lorsque le traitement par le dispositif 50 consiste à dupliquer le paquet d'information reçu de sorte que le séquencement de paquets reçus par le serveur 20 de données ne soit pas faussé ou mis en erreur par le retrait d'un paquet d'une session entre l'équipement terminal 30 et le serveur 20 de données. Selon une alternative, le traitement peut consister à compter le nombre de messages transmis pour une application. Ainsi, dans le cas où il s'agit de différencier la facturation par utilisateur (propriétaire du véhicule 10, possesseur du terminal 60, gestionnaire de l'équipement utilisateur 30), il est nécessaire de compter les messages ou le volume de données généré par les applications et de répercuter les frais associés au nombre ou au volume à l'utilisateur ou gestionnaire utilisant ou gérant l'application. Dans ce cas, l'attribut pourra être un nombre de messages ou un volume de données des messages émis.

Selon un autre exemple, le dispositif 50 peut également appliquer un traitement aux messages relatifs à l'application App2 transmis par le serveur 20 de données à destination de l'équipement terminal 30. Selon cet exemple, lors d'une étape 310 le serveur 20 de données émet des messages relatifs à l'application App2 à destination de l'équipement terminal 30. Les étapes 311 à 317 sont équivalentes aux étapes 303 à 309 décrites précédemment si ce n'est que le serveur 20 de données effectue les opérations de l'équipement terminal 30 et de façon réciproque, l'équipement terminal 30 réalise les opérations effectuées par le serveur 20 de données.

Il est à noter que l'équipement d'accès 40 peut également effectuer certaines ou l'ensemble des opérations réalisées par le dispositif 50 en complément ou non des opérations effectuées par le dispositif 50.

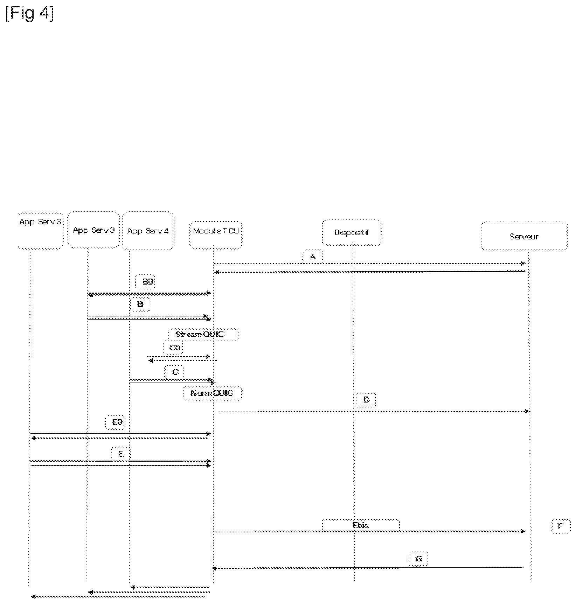

En relation avec la [Fig 4], on présente une mise en œuvre du procédé de discrimination selon un autre mode de réalisation de l'invention.

Le procédé de discrimination et le procédé de traitement correspondant activent une extension QFLOW_A de QUIC qui force les échanges de paquets QUIC en mode « gestion de flux » pour seulement les paquets QUIC à comptabiliser comme étant du trafic a facturer au propriétaire de la carte SIM du module TCU (équipement terminal) d'une voiture : regroupement des messages QUIC à comptabiliser dans des paquets QUIC marqués. L'extension QFLOW_A modifie l'usage du champ spinbit pour marquer les paquets QUIC à comptabiliser par le dispositif.

De plus, selon une alternative, sur le serveur, l'activation de l'extension QFLOW_A créé dans le serveur une table de flux utilisée pour implémenter le procédé de « gestion de flux » pour les paquets émis par le serveur.

Le constructeur du véhicule développe typiquement le procédé en OEM (en anglais Original Equipment Manufacturer) dans la tablette du tableau de bord afin que l'OS (en anglais Operating System), le navigateur Web ou

EP 4 162 663 B1

les applications regroupent les messages QUIC des flux à comptabiliser dans des paquets QUIC marqués afin que dispositif, par exemple géré par un opérateur mobile les identifie et les comptabilise dans le cas où le traitement consiste à comptabiliser les messages des flux concernés. Le procédé QFLOW_A est décrit en mode « gestion de flux » : le critère de regroupement des messages dans des paquets marqués est l'identifiant de l'application qui a généré les messages dans des paquets marqués. Il est généralisable a d'autres modes de regroupement : par exemple, un autre critère de regroupement des messages peut être le regroupement des messages de contrôles de QUIC afin de compter pouvoir facturer uniquement les messages de données « utiles » (c'est-à-dire ne comprenant les données de contrôle de type DNS par exemple) au client final. D'autres traitements peuvent consister à contrôler la signalisation à des fins de sécurité ou de router plus rapidement les messages de contrôle dans un dispositif tel qu'un proxy. Un usage typique du procédé est le stockage de la signalisation pour effectuer une inspection ultérieure des messages stockés et transmis dans des paquets QUIC.

Le procédé est applicable à un mode sans marquage visible de l'extérieur du paquet. Un usage typique de ce mode est l'accélération de la signalisation dans les dispositifs de type « reverse proxy » où le routage de la signalisation vers une fonction d'inspection de type DPI (télémétrie, analyse de problèmes, sécurité...).

Le procédé de discrimination peut inclure différents modes pouvant être combinés tels que par exemple :

- Le mode QFLOW_A : Seulement les messages émis par le client TCU (équipement terminal) sont ajoutés à un paquet QUIC qui est marqué, donc seulement les données émises sont comptabilisés comme du trafic facturé par le constructeur.
- Le mode QFLOW_B : Une extension QUIC indique dans le paramètre de transport nommé « spinbit » que le paquet doit être comptabilisé. C'est suffisant pour comptabiliser le volume payé par le constructeur (qui ne doit pas être facturé au propriétaire de la voiture).
- QFLOW_C : Une extension QUIC indique dans un paramètre de transport tel que le spinbit et les 2 bits RR du protocole QUIC sont utilisés pour décrire l'identifiant d'une application. Ainsi, 3 bits permettent de distinguer 8 applications différentes (par exemple waze, gmap, ...) ou un autre critère de regroupement (identifiant du terminal, critère de QoS...).

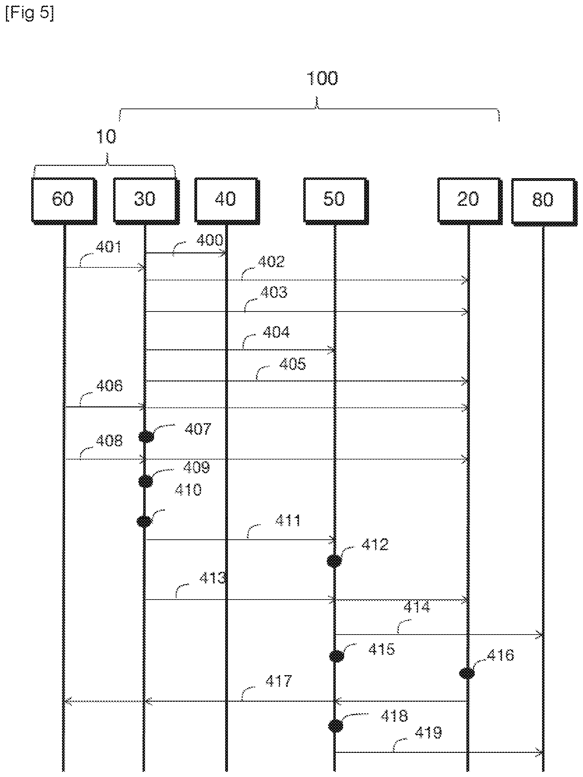

Les étapes du procédé dans ce mode de réalisation proposé dans la [Fig 5] sont les suivantes :

- Etape A : création de la connexion QUIC entre le module TCU (équipement terminal) et le serveur (serveur de données) sans activation explicite de l'extension QFLOW_A: le serveur en déduit ainsi que le spinbit du protocole QUIC est utilisé pour le mode QFLOW_A;
- Etapes B0 (et E0): Le module TCU reçoit des messages de l'application App Serv 3 d'un terminal. Le module TCU sait (par exemple grâce à une table d'applications à facturer) que ces messages sont à comptabiliser. Le module TCU reçoit donc des données qui sont à comptabiliser par le dispositif. Il créé un paquet QUIC qui regroupera les données à comptabiliser par le dispositif. Il peut structurer ces données par application dans le cas où le paquet QUIC comprend des données de plusieurs applications distinctes.
- Etape B: Le module TCU (et plus précisément la pile QUIC du module) reçoit des données (messages) à comptabiliser et à ajouter dans un paquet de gestion de flux (Stream) QUIC. La pile QUIC peut inclure le message reçu ou seulement une partie du message, tel que les adresses source et destination, le type de protocole.
- Etape C0 : Le module TCU reçoit des messages relatifs à l'application App Serv 4 qui ne sont pas à comptabiliser par le dispositif. Un message QUIC non marqué (Norm QUIC) est créé et acheminera ces messages vers le serveur, destinataire de ces données.
- Etape C (et étape E): Le stack QUIC reçoit des données (ou messages) et les traitent pour les inclure dans le paquet QUIC créé lors de l'étape C0. Il émet le paquet QUIC « non marqué » à destination du serveur.
- Etape D : Le serveur reçoit des paquets QUIC « non marqués », c'est-à-dire avec une valeur SpinBit à 0. Il est à noter que le dispositif n'applique aucun traitement à ces paquets dits non marqués.
- Etape E: Un autre terminal émet des messages relatifs à l'application App Serv 3. Ces messages sont à comptabiliser comme indiqué à l'étape BO. Lorsque le paquet QUIC marqué comprend un volume de messages suffisant et/ou après un certain délai après la création d'un paquet Stream, le module TCI émet le paquet QUIC Stream à destination du serveur.
- Etape Ebis Le dispositif identifie le paquet QUIC Stream à l'aide du bit Spinbit marqué à 1 et applique le traitement. Dans le cas présent, le dispositif le comptabilise et ajoute le volume de données correspondant à l'application App Serv 3 grâce à l'information transmise dans le paquet Stream, c'est-à-dire l'attribut relatif à l'application App serv 3.
- Etape F : La pile QUIC du serveur reçoit un paquet QUIC Stream et elle traite les messages du paquet.
- Etape G : Le dispositif achemine des paquets QUIC émis par le serveur à destination des terminaux attachés au module TCU ou spécifiquement au module TCU mais n'applique pas de traitement car il s'agit du mode QFLOW_A. Dans le mode QFLOW_B, les paquets QUIC émis par le serveur dont traités conformément au traitement appliqué

**EP 4 162 663 B1**

aux paquets émis par le module TCU.

Dans le mode QFLOW_B, l'étape B ci-dessus est modifiée pour que le module TCU indique au serveur d'activer le mode QFLOW_B informant ainsi que le bit Spinbit est utilisé pour identifier le transport de messages à comptabiliser dans les paquets QUIC. Les étapes F et G ci-dessus sont en outre modifiées de la façon suivante :

- Etape F: Quand le serveur reçoit un paquet QUIC avec le spinbit à 1, il extrait les messages QUIC (dans ce mode de réalisation, les messages sont eux même des paquets QUIC) du paquet et mémorise une liste d'identifiants associés aux messages dans une table des flux. Ensuite il traite chaque frame :

   ○ Sauvegarde des identifiants ;
   ○ Traitement de chaque paquet QUIC Stream ;
   ○ Réponses à chaque paquet QUIC Stream;
   ○ Ajout des messages de réponses (ou des attributs relatifs aux messages de réponse) aux messages reçus dans un paquet QUIC Stream;

- Etape G: Envoi du paquet QUIC Stream à destination du module TCU (en indiquant l'adresse des terminaux ayant généré les messages App Serv 3)
- Etape Gbis : Le Dispositif identifie le paquet QUIC Stream reçu du serveur et applique le traitement de comptabilisation des messages à partir des messages ou des attributs présents dans le message QUIC.

Le mode QFLOW_C se distingue des deux modes ci-dessus par une identification différente des paquets Stream. Le traitement appliqué peut se distinguer selon l'identification du paquet Stream reçu. Par exemple, le traitement peut être appliqué en fonction de l'application, en fonction de l'entité en charge du paiement des messages, en fonction du terminal émettant les messages ou bien une combinaison de ces critères:

Selon un exemple, dans ce mode QFLOW_C, le comptage est effectué en fonction de l'entité en charge du paiement des messages. Les attributs des messages sont regroupés dans des paquets QUIC utilisés pour facturer une entité particulière.

- Usage des 3 bits spinbit et RR pour distinguer plusieurs mode de comptage
- Les bits correspondent à une entité de facturation des messages :

```
{[name : com.car.android.app,          payeur: Entreprise A, Id : 010],
 [name : com.netflix.android.app,      payeur: Entreprise B, Id : 011],
 [name : com.poki.android.app,         payeur: Utilisateur C, Id : 110],
 [name : com.sponsordata.android.app,  payeur: Gestionnaire TCU, Id : 101].
```

Selon un autre exemple, le comptage est géré par catégorie d'applications. Dans cet exemple, les 3 bits spinbit et RR de l'entête QUIC indiquent la catégorie du paquet, c'est-à-dire un ensemble d'applications dont les messages sont à regrouper et à marquer pour ensuite qu'ils soient traités par le dispositif. Ci-dessous un exemple est proposé :

```
{[name : com.car.android.app,          id: 100],
 [name : com.netflix.android.app,      id: 101],
 [name : com.poki.android.app,         id: 110],
 [name : com.sponsordata.android.app,  id:111],
```

En relation avec la [Fig. 5], on présente une mise en œuvre du procédé de comptage d'un paquet selon un mode de réalisation de l'invention.

Les entités 10, 20, 30, 40, 50, 60 et 100 sont équivalentes aux entités ayant les mêmes intitulés dans les [Fig 1], [Fig 2] et [Fig 3].

Lors d'une étape 400, l'équipement terminal 30 s'attache et se connecte à l'équipement d'accès 40. Il est considéré qu'une session chiffrée est établie entre l'équipement terminal 30 et le serveur 20 de données. Cela signifie que les paquets de données échangés entre l'équipement terminal 30 et le serveur 20 de données sont chiffrés à l'aide d'une clé de chiffrement, par exemple une clé de chiffrement privée, et le serveur de données déchiffre les paquets reçus à l'aide d'une clé de déchiffrement, par exemple une clé publique, correspondant à la clé de chiffrement. De façon correspondante, les paquets transmis par le serveur 20 de données à destination de l'équipement terminal 30 sont chiffrés puis déchiffrés. Lors d'une étape 401, le terminal 60 transmet des paquets relatifs à une application App4 à l'équipement terminal 30 pour que celui-ci les transmette lors d'une étape 402 au serveur 20 de données avec lequel le terminal a établi une session. Selon un exemple, l'application App4 est une application d'accès web. Comme indiqué ci-dessus, les paquets transmis lors de l'étape 402 sont chiffrés à l'aide d'une clé de sécurité. Les paquets émis comprennent en outre une donnée de détermination informant le serveur 20 de données sur la clé de sécurité effectivement utilisée pour le chiffrement des paquets. Selon un exemple, la donnée de détermination correspond à des valeurs de un ou plusieurs éléments binaires de l'en-tête des paquets tels que par exemple un élément binaire de phase tel que défini par exemple dans les protocoles TLS et QUIC permettant d'indiquer au serveur de données un changement de clé, la nouvelle clé étant calculée à partir d'un algorithme et de la clé précédemment utilisée pour l'échange de paquets. Ainsi, les paquets sont successivement échangés avec des clés différentes, le changement de clé étant indiqué par un changement de phase. La donnée de détermination peut donc correspondre au bit de changement de phase voire à un bit de changement de phase et de bits supplémentaires pour permettre un enrichissement de l'information relative à la clé utilisée par l'équipement terminal pour l'émission des paquets vers le serveur 20 de données. Lors d'une étape 403, l'équipement terminal 30 émet des paquets relatifs à une application App6 à destination du serveur 20 de données. Selon un exemple, l'application App6 est un application de sécurité permettant de déterminer le positionnement du véhicule 10 lors de son déplacement et de pouvoir organiser des secours en cas de problème tel qu'une panne du véhicule ou un accident.

Il est considéré dans la suite du mode de réalisation que le comptage des paquets relatifs à une application App5, de streaming vidéo, doit être opéré par l'équipement terminal 30 de telle façon à ce que les données relatives au service de streaming vidéo utilisé par le terminal 60 soit effectivement facturé à l'utilisateur dudit service et non pas au propriétaire du véhicule 10 par exemple. Cette activation peut être statique, c'est-à-dire qu'une liste d'applications pour lesquelles le comptage doit être opéré est maintenue par l'équipement terminal 30. Cette activation peut également dynamique par exemple suite à la réception d'une requête transmise par une plateforme d'administration des applications ou de l'équipement terminal 30.

Selon une alternative, lors d'une étape 404, l'équipement terminal émet à destination du dispositif 50 un message d'activation d'un procédé de capture de paquets permettant au dispositif de se positionner en écoute pour identifier des paquets de coopération transmis par l'équipement terminal 30, de telle façon à ce que le comptage des paquets puisse être opéré. Lors de cette étape 404, selon un exemple, l'équipement terminal peut en outre indiquer un identifiant de connexion utilisé qui sera ajouté au paquet de coopération et que le dispositif pourra effectivement identifier. Ainsi parmi tous les paquets que le dispositif 50 achemine, il pourra identifier les paquets de coopération. Il est à noter que cet identifiant de connexion peut être transmis de façon spécifique au dispositif 50 si par exemple aucun message d'activation n'est transmis. Le message d'activation peut, selon une autre alternative, également comprendre la clé de déchiffrement qui devra être utilisée par le dispositif 50 pour déchiffrer le paquet de coopération, possiblement conformément à l'identifiant de connexion compris dans le message. Ce message d'activation pourra lui-même être chiffré à l'aide d'une clé initialement fournie au dispositif 50 dans un message non représenté sur la [Fig 5]. Selon une autre alternative, lors d'une étape 405, l'équipement terminal émet à destination du serveur 20 de données un message d'activation du procédé de capture mis en œuvre par le dispositif 50. Ce message a pour but d'informer d'une part le serveur 20 de données que des clés initialement utilisées pour le chiffrement de paquets entre l'équipement terminal 30 et le serveur 20 de données pourront être utilisées à d'autres fins, pour le chiffrement de paquets de coopération. Ce message d'activation a également pour objet d'indiquer au serveur 20 de données de mettre en œuvre le procédé de comptage de telle façon que les paquets échangés dans une session bidirectionnelle entre l'équipement terminal 30 et le serveur 20 de données soient comptés pour par exemple être ensuite facturés au propriétaire du terminal 60.

Lors d'une étape 406, le terminal 60 émet une requête d'accès à un service de streaming vidéo au serveur 20 de données par l'intermédiaire de l'équipement terminal 20 assurant la connexion du terminal 60 au réseau 100.

Lors d'une étape 407, l'équipement terminal 30 initialise un compteur pour les paquets reçus du terminal 60 et relatifs à l'application App5. L'équipement terminal incrémente le compteur avec le nombre de paquets reçus du terminal 60. Il est à noter que le compteur peut comprendre le nombre de paquet ou bien encore le volume de données correspondant aux paquets reçus. Selon un exemple, le compteur utilise les Mbits comme unité du compteur. Selon un exemple, l'équipement terminal 30 initialise un compteur par terminal et incrémente le compteur pour les paquets émis par le terminal correspondant ou bien utilise un compteur pour l'application App5 indépendamment du terminal émettant les paquets. Selon un autre exemple, le compteur est incrémenté en fonction des paquets reçus d'un terminal pour un ensemble d'applications. Ainsi tous les paquets reçus du terminal 60 pourront être comptabilisés. Selon cet exemple, les paquets relatifs à l'application App4 et App5 sont comptés par l'équipement terminal 30.

Lors des étapes 408 et 409, le terminal 60 émet de nouveaux paquets relatifs à l'application App5 et l'équipement terminal 30 incrémente le compteur initialisé lors de l'étape 407.

Lors d'une étape 410, l'équipement terminal 30 ajoute le compteur incrémenté dans un paquet de coopération. Cet ajout peut se produire après une durée écoulée suite à l'initialisation du compteur, une fois que le compteur atteint un certain volume de données ou de paquets ou bien suite à la réception d'un message d'un serveur de gestion. L'équipement terminal 30 détermine en outre une donnée de détermination à ajouter au paquet de coopération. Selon un exemple, cette donnée de détermination correspond à une clé de chiffrement précédemment utilisée par l'équipement terminal 30 pour émettre des données vers le serveur 20 de données. Par exemple, la donnée de détermination peut être la donnée de détermination utilisée pour l'envoi des paquets lors des étapes 402 et/ou 403, notamment si cette donnée n'est plus utilisée pour l'envoi des paquets lors des étapes 406 et 409 par exemple. Selon une alternative, le paquet de coopération comprend un identifiant de connexion, tel que possiblement indiqué dans le message d'activation lors de l'étape 405. Selon un autre exemple, l'identifiant de connexion comprend des éléments binaires d'un protocole, notamment d'un protocole sécurisé de multiplexage de données. Cet identifiant de connexion peut, selon un exemple, comprendre les bits Spin-Bit et Reserved Bits du protocole QUIC ou des bits équivalents des protocoles HTTP2 ou HTTP3. L'identifiant de connexion peut, selon une autre alternative, comprendre la donnée de détermination du paquet. Selon cet exemple, le dispositif identifie le paquet de coopération à partir de la donnée de détermination comme indiqué par la suite.

Lors d'une étape 411, l'équipement terminal transmet le paquet de coopération à destination du serveur 20 de données par l'intermédiaire du dispositif 50. Le paquet de coopération comprend la donnée de détermination de la clé de chiffrement utilisée pour le chiffrement du paquet de coopération ainsi que le compteur incrémenté et possiblement un identifiant de connexion utilisé par le dispositif 50 pour identifier le paquet de coopération parmi l'ensemble des paquets reçus.

Le dispositif 50, s'il a reçu le message d'activation lors de l'étape 404 ou bien par défaut dès lors qu'il reçoit des paquets, met en œuvre une analyse des paquets reçus en provenance de l'équipement terminal 30. Cette analyse peut porter sur la comparaison de valeurs d'identifiants de connexion et/ou de donnée de détermination des paquets reçus.

Lors d'une étape 412, le dispositif 50 reçoit le paquet de coopération et l'identifie à l'aide de l'identifiant de connexion, si celui-ci est présent dans le paquet, et/ou de la donnée de détermination de la clé de chiffrement utilisée. Dans ce dernier cas, sachant que les paquets reçus précédemment ne comprennent plus cette donnée de détermination, la réception d'un paquet comprenant une donnée de détermination distincte des paquets à acheminer dans un intervalle de temps donné indique au dispositif 50 qu'il s'agit d'un paquet de coopération. Selon un exemple, lorsque le dispositif 50 ne reçoit plus pendant un intervalle de temps de paquets avec une valeur v0 comme donnée de détermination et qu'il commence à recevoir des paquets ayant une valeur v1, il peut initialiser un timer et s'il reçoit de nouveau un paquet avec une valeur v0 comme donnée de détermination après un certain délai après l'initialisation du timer, il est probable que le paquet soir un paquet d'information. Dans le cas où cette donnée de détermination correspond à une clé de chiffrement nouvellement utilisée pour l'échange de paquets entre l'équipement terminal 30 et le serveur 20 de données, le dispositif 50 ne pourra déchiffrer ce paquet qui aura été faussement identifié comme un paquet de coopération puisqu'il ne détient pas la clé permettant de déchiffrer un tel paquet. La donnée de détermination du paquet d'information reçu, se distinguant des données de détermination des paquets de données reçus avant et/ou après la réception du paquet d'information, la détection de ce paquet d'information peut être effectuée à l'aide de cette donnée de détermination. La clé de chiffrement/déchiffrement associée à la donnée de détermination du paquet d'information pouvait, selon un exemple, être utilisée lors d'une session précédente entre l'équipement terminal 30 et le serveur de données. Selon un autre exemple, un contexte de session peut être maintenu entre l'équipement terminal 30 (ou un terminal lui étant connecté) et le serveur 20 de données et lorsqu'une nouvelle connexion est établie, le contexte de session est rétabli par exemple par l'utilisation de cookies et il est possible de réutiliser une clé correspondant à une connexion précédente d'une même session dont le contexte est maintenu. Selon encore un autre exemple, la clé de chiffrement associée à la donnée de détermination était utilisée lors des échanges d'initialisation de session (en anglais Handshake) entre l'équipement terminal 30 et le serveur 20 de données. Dans le cas où l'identification s'appuie également ou uniquement sur l'identifiant de connexion, il convient alors pour le dispositif 50 de comparer la valeur de l'identifiant de connexion avec une ou plusieurs valeurs d'identifiants correspondant à des paquets d'information.

Selon une alternative, notamment dans le cas où le dispositif 50 n'a pas reçu préalablement la clé correspondant à la donnée de détermination du paquet d'information, l'équipement terminal transmet lors d'une étape 413 une clé permettant de déchiffrer le paquet d'information reçu. Cette alternative permet d'éviter les erreurs et le déchiffrement de paquets qui ne sont pas des paquets d'information mais dont la donnée de détermination correspond à une clé effectivement utilisée pour le chiffrement/déchiffrement des données.

Selon un exemple, lors d'une étape 414, le dispositif transmet le compteur à destination d'un équipement 80 de facturation assurant la conversion du compteur en informations de facturation qui seront transmises à l'utilisateur du terminal 60, le compteur pouvant comprendre des informations sur l'application App5, le terminal ayant émis les paquets voire des informations d'horodatage des paquets relatifs à l'application App5. Selon une alternative, lors d'une étape 415, le paquet de coopération est retiré de l'ensemble des paquets à émettre vers le serveur 20 de données. Sachant que les informations présentes dans le paquet d'information sont destinées à être traitées par le dispositif, le serveur 20 de données n'a pas de raison de recevoir ce paquet qui contient en outre une donnée de détermination normalement plus utilisée pour le déchiffrement des paquets reçus en provenance de l'équipement terminal 30.

Selon un exemple, lors d'une étape 416, le serveur 20 de données met en œuvre le procédé de comptage tel que mis en œuvre par l'équipement terminal 30 et est apte à compter les paquets relatifs à l'application App5, à initialiser un compteur de ces paquets et à l'ajouter à un paquet d'information transmis à l'équipement terminal pour qu'il soit communiqué au dispositif 50 suite à son identification par une donnée de détermination, possiblement différente de la donnée utilisée par l'équipement terminal 30 et/ou d'un identifiant de connexion possiblement également différent de l'identifiant de connexion utilisé pour les paquets d'information émis par l'équipement terminal 30. A ce propos, des échanges entre le serveur 20 de données et le dispositif 50 ont pu se produire préalablement conformément à l'étape 404 décrite ci-dessus.

Lors d'une étape 417, le serveur 20 de données transmet via le dispositif 50, l'équipement d'accès 40 et l'équipement terminal 30 des paquets relatifs à l'application App5, pour transmettre le contenu visio requis par le terminal 60 lors de l'étape 408. Lors d'une étape 416, le dispositif 50analysant les paquets reçus en provenance du serveur 20 de données identifie un paquet d'information à l'aide des informations ci-dessus décrites, le stocke possiblement s'il ne possède pas encore la clé permettant de le déchiffrer et d'en extraire le compteur pour le transmettre à l'équipement 80 de facturation lors d'une étape 419.

Le procédé de comptage mis en œuvre par l'équipement terminal 30 et possiblement par le serveur 20 de données permet ainsi au dispositif 50, en collaboration avec l'équipement 80 de facturation, de pouvoir facturer les paquets et donc les données de l'application App5. L'utilisation de tels procédés permet ainsi de compter les données relatives à chaque application et de réutiliser des clés de chiffrement/déchiffrement qui ne sont plus utilisées pour la transmission des paquets comprenant les données utiles des applications, c'est-à-dire requises pour l'accès aux contenus audio, visio, texte des différentes applications.

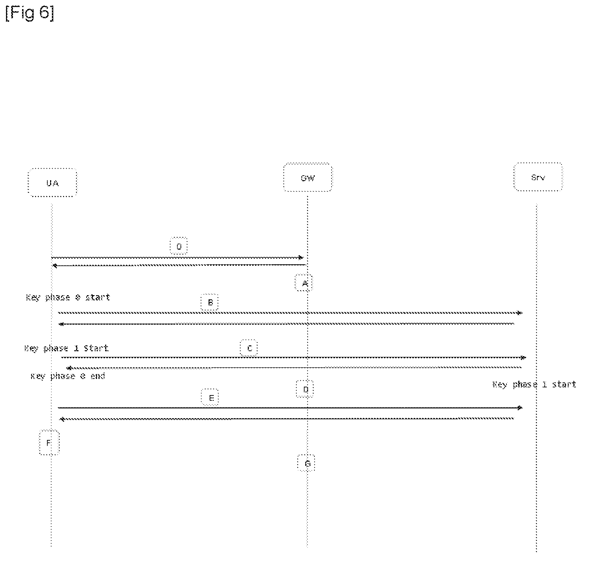

En relation avec la [Fig 6], on présente une mise en œuvre du procédé de comptage selon un autre mode de réalisation de l'invention.

Le procédé de comptage et le procédé de capture correspondant peuvent être mis en œuvre conformément à plusieurs modes intitulés RFLOW_A et RFLOW_B.

Le mode RFLOW_A est un mode unidirectionnel qui ne nécessite pas de modification dans le serveur parce que le dispositif retire les paquets de coopération après réception d'un signal du terminal, ou après l'écoulement d'un délai ou bien encore quand la réception d'un volume de données est atteinte. Le mode RFLOW_A définit ainsi un paquet de coopération dans une extension du protocole QUIC qui permet l'échange de donnée avec le dispositif (type d'application, compteurs). Le paquet de coopération est chiffré avec une clé dite 1-RTT utilisée lors de la phase 0 (initialisation de la session) du protocole QUIC. L'équipement terminal envoie la clé 1-RTT de la phase 0 de QUIC au moment qu'il souhaite durant ou après la fin de la connexion. Le dispositif enregistre tout ou partie des messages échangés entre l'équipement terminal et le serveur de données, afin d'identifier et de décoder les paquets de coopération après la réception de la clé de coopération permettant de déchiffrer les paquets de coopération enregistrés.

Le mode RFLOW_B se distingue du mode RFLOW_A de la façon suivante. En plus de RFLOW_A, le mode bidirectionnel RFLOW_B active l'extension (le procédé de comptage) coté serveur par l'envoi d'un Transport Parameter de QUIC COOP_MODE par exemple au moment de l'établissement de la session entre l'équipement terminal et le serveur de données. Ainsi le serveur ne mettra pas fin à la connexion sur une erreur quand il recevra des messages 1-RTT après la phase de transition. En effet, s'il n'active pas le procédé de comptage, il pourrait considérer que la réception de paquets chiffrés avec une clé qui n'est normalement plus utilisée est une erreur. De plus le serveur pourra également émettre et recevoir des paquets de coopération.

La [Fig 6] décrit un mode de réalisation relatif au mode RFLOW_A.

Un UA (équipement terminal) établit une session avec un serveur (SRV) de données permettant l'acheminement de messages (ou paquets) via un dispositif (GW) par exemple géré par un opérateur d'un réseau de communication.

Etape 0 : Etape (0) Le terminal UA et le dispositif GW s'échangent des clés de chiffrement ENC_KEY_UA et de déchiffrement DEC_KEY_UA

Différents types de clés de chiffrement/déchiffrement peuvent être utilisés, par exemple:

• Une clé dite externe « external PSK » telle que définie dans le document https://tools.ietf.org/html/draft-ietf-tls-tls13-cert-with-extern-psk-07 est fournie par fournie par le dispositif GW à l'UA

• Une clé eSNI de l'enregistrement DNS eSNI du FQDN du GW tel que définie dans le document https://tools.ietf.org/html/draft-ietf-tls-esni-05

Etape A : Le dispositif active le procédé de capture des paquets reçus de l'équipement terminal UA. Il est à noter que cette étape peut être effectuée suite à la réception d'un message d'activation de la capture par l'UA.

Etape B : Messages de « Handshake » échangés entre l'UA et le SRV. Les messages utilisent des clés identifiées par une donnée de détermination correspondant à une phase 0. Cette clé est la future clé de coopération. Elle appelée par la suite clé de phase 0 initiale ou encore clé de phase de 0 de reconnexion même s'il peut s'agir de tout type de clé comme décrit dans l'étape 0.

Etape C : Des paquets de données relatifs à des applications, par exemple émis par des terminaux connectés à l'UA et non représentés sur la [Fig 6] sont échangés entre l'UA et le SRV. A ce moment, les paquets échangés peuvent comprendre des données de détermination correspondant à la phase en cours (0 dans l'exemple) ou à une nouvelle phase (1 dans l'exemple). Les paquets de données peuvent en effet être chiffrés avec une nouvelle clé de chiffrement.

Etape D : GW active l'extension RFLOW du procédé de capture après un délai de n ms sans paquet comprenant de donnée de détermination correspondant à la phase supposée active (0 dans l'exemple), ou après n paquets consécutifs comprenant une donnée de détermination correspondant à la nouvelle phase (1 dans l'exemple), qui ne devrait plus être utilisée pour l'échange des paquets entre l'UA et le SRV suite au changement de clé de chiffrement. A partir de ce moment, les paquets de la phase précédente (dont la donnée de détermination correspond à la phase 0) sont considérés comme des paquets de coopération et sont capturés, et retirés du flux de paquets échangés entre l'UA et le SRV par GW.

Selon un exemple, GW utilise le bit de marquage standard des paquets de phase inversée de QUIC comme donnée de détermination.

Par généralisation, par la suite la phase (donnée de détermination) sera à nouveau inversée et repassera en phase 0. GW suspendra alors l'extension RFLOW dès la détection d'un paquet de coopération qu'elle ne parvient pas à déchiffrer. Ce paquet sera émis vers le serveur SRV et non stocké par GW. Ensuite elle activera l'extension RFLOW après un délai de n ms sans paquet de phase précédente à 1 ou après n paquets consécutifs comprenant une donnée de détermination correspondant à la nouvelle phase (0 dans l'exemple). Ces paquets de la phase précédente (dit de coopération) sont capturés et retirés du flux par GW.

Etape E: Echange de paquets de données non marqués ayant une donnée de détermination correspondant à une phase à 1

Etape F : Comptage des messages (qui peuvent être des paquets ou des données de type différents), et ajout du compteur dans un paquet de coopération. Mise à 0 de la phase (donnée de détermination) du paquet de coopération. Envoi du paquet de coopération à destination du GW.

Etape G : Capture du paquet de coopération comprenant le compteur par identification de la phase à 0 utilisée comme donnée de détermination. Il est à noter que la clé de déchiffrement associée à la phase 0 initiale peut être envoyée par l'UA à la GW, alternativement ou en complément à l'envoi lors de l'étape 0.

Si le mode RFLOW_B est mis en œuvre. Suite aux messages Handshake échangés ou au moment où les messages Handshake sont échangés, un message d'activation de l'extension (du procédé de comptage) est transmis par l'UA au SRV.

En outre, dans ce mode RFLOW_B, la GW ne retire pas les paquets de coopération de l'ensemble des paquets acheminés par la GW entre l'UA et le SRV. Les paquets de coopération ayant une donnée de détermination correspondant à un paquet de coopération (phase 0) sont donc reçus par le SRV. Conformément aux sessions établies entre l'UA et le SRV, le serveur SRV émet des données vers l'UA, en réponse ou non aux paquets de données reçus de l'UA. Le SRV met en œuvre le procédé de comptage et la GW capture également les paquets de coopération transmis par le SRV à destination de l'UA en sélectionnant les paquets de coopération en fonction de la valeur de la donnée de détermination présente dans les paquets reçus également du serveur SRV. Dans ce mode RFLOW_B, l'UA recevra également les paquets de coopération.

Il est à noter que, selon les techniques antérieures, dans les protocoles QUIC et TLS1.3, la reconnexion de la session est réalisée en utilisant la clé utilisée lors de la connexion précédente. Selon ce mode, le procédé de comptage et de capture correspondant recycle la clé de 0-RTT pour marquer les paquets de coopération à identifier par la GW.

Lorsqu'il s'agit d'une nouvelle session, c'est-à-dire qu'aucune session n'a été établie précédemment, une mise en œuvre du procédé telle que décrite ci-dessous peut être déployée.

Lorsque les équipements UA et SRV établissent une première connexion (ie l'extention pre_shared_key n'a pas été activée), une fois le handshake terminé et le master_secret obtenu, l'UA et le SRV dérivent le cooperation_secret par l'opération : cooperation_secret = QHKDF-Expand(master_secret, "coop s", hash.length)

Ce secret est ensuite fourni à GW qui pourra (comme l'UA et le SRV) calculer la clé et le vecteur d'initialisation (iv - initialisation vector) par les opérations suivantes :

$$key= QHKDF\text{-}Expand(cooperation\_secret, "key", key\_length)$$

$$iv= QHKDF\text{-}Expand(cooperation\_secret, "iv", iv\_length)$$

En outre, il est à noter que les modes RFLOW_A et RFLOW_B peuvent être combinés afin d'augmenter les niveaux de coopération en créant plusieurs modes d'identification des paquets de coopération par GW:

- un bit S spinbit identifie les paquets de coopération et les bits RR (R1, R2) distinguent plusieurs modes de coopération:

   ◦ dans le mode RFLOW_A, S à 1 indique que le paquet est un paquet de coopération (usage de clé DEC_KEY_UA pour le déchiffrer).

◦ Options avancées : l'usage des bits R1 et R2 distinguent 4 types de paquets de coopération :

- Read: 00 pour indiquer un paquet QUIC comportant une zone lisible par GW ;
- Delete: 01 pour indiquer un paquet QUIC lisible par la gateway et devant être retiré par GW;
- Update: 10 pour indiquer un paquet QUIC modifiable en clair par GW (pas de chiffrement) ;
- Modif: 11 pour indiquer un paquet QUIC end-to-end ouvert à la coopération en mode écriture;

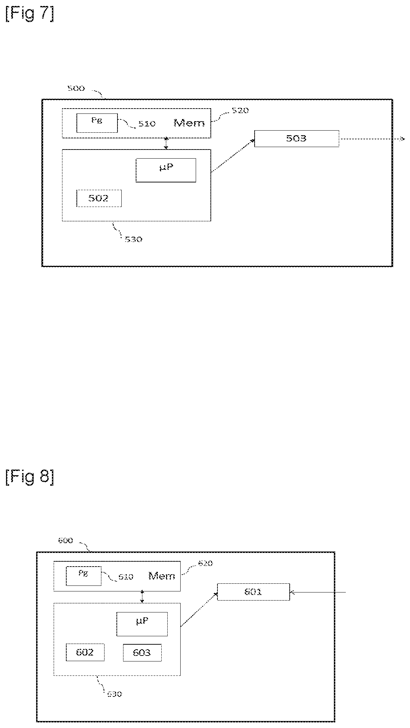

En relation avec la [Fig. 7], on présente un exemple de structure d'un dispositif 500 de discrimination selon un mode de réalisation de l'invention.

Le dispositif 500 de discrimination met en œuvre le procédé de discrimination, dont différents modes de réalisation viennent d'être décrits. Le dispositif de discrimination peut être mis en œuvre mis en œuvre dans un dispositif d'un réseau de communication tel qu'un équipement terminal, un équipement d'accès d'un réseau local, tel qu'une passerelle domestique, un terminal ou un équipement de type routeur.

Par exemple, le dispositif 500 comprend une unité de traitement 530, équipée par exemple d'un microprocesseur $\mu$P, et pilotée par un programme d'ordinateur 510, stocké dans une mémoire 520 et mettant en œuvre le procédé de discrimination selon l'invention. A l'initialisation, les instructions de code du programme d'ordinateur 510 sont par exemple chargées dans une mémoire RAM, avant d'être exécutées par le processeur de l'unité de traitement 530.

Un tel dispositif 500 comprend :

- un module de marquage 502, apte à
- ajouter un attribut relatif au premier message dans un paquet d'information, ledit paquet regroupant des attributs auxquels un traitement est appliqué,
- appliquer un marquage du paquet d'information comprenant l'attribut ajouté,
- un émetteur 503, apte à émettre le paquet d'information comprenant le marquage appliqué à destination d'un serveur de données.

En relation avec la [Fig. 8], on présente un exemple de structure d'un dispositif de traitement selon un mode de réalisation de l'invention.

Le dispositif 600 de traitement met en œuvre le procédé de traitement, dont différents modes de réalisation viennent d'être décrits. Le dispositif 600 de traitement peut être mis en œuvre dans un dispositif d'un réseau de communication tel qu'un routeur, un pare-feu, un équipement d'inspection de flux (en anglais Deep Packet Inspection), ou bien encore un serveur de données.

Par exemple, le dispositif 600 comprend une unité de traitement 630, équipée par exemple d'un microprocesseur $\mu$P, et pilotée par un programme d'ordinateur 610, stocké dans une mémoire 620 et mettant en œuvre le procédé de traitement selon l'invention. A l'initialisation, les instructions de code du programme d'ordinateur 610 sont par exemple chargées dans une mémoire RAM, avant d'être exécutées par le processeur de l'unité de traitement 630.

Un tel dispositif 600 comprend :

- un récepteur 601 apte à recevoir un paquet d'information d'un équipement terminal.
- un détecteur 602, apte à détecter un paquet d'information comprenant l'attribut ajouté par l'équipement terminal, en fonction d'un marquage appliqué au paquet d'information reçu,
- un module 603 de traitement, apte à traiter l'attribut compris dans le paquet d'information reçu.

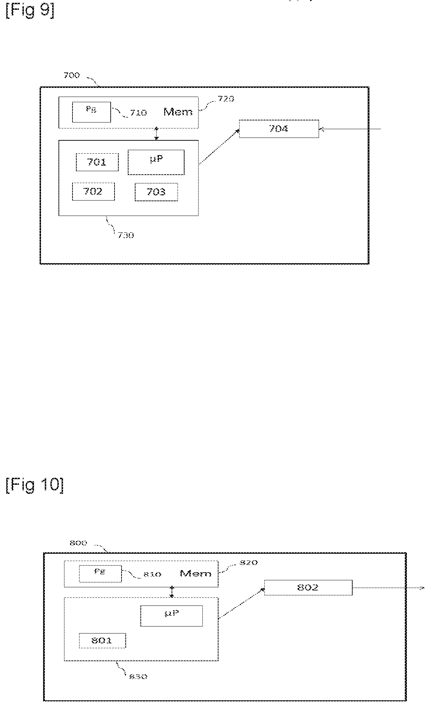

En relation avec la [Fig. 9], on présente un exemple de structure d'un dispositif 700 de capture selon un mode de réalisation de l'invention.

Le dispositif 700 de capture met en œuvre le procédé de capture, dont différents modes de réalisation viennent d'être décrits. Le dispositif 700 de capture peut être mis en œuvre dans un dispositif d'un réseau de communication tel qu'un routeur, un pare-feu, un équipement d'inspection de flux (en anglais Deep Packet Inspection), ou bien encore un serveur de données.

Par exemple, le dispositif 700 comprend une unité de traitement 730, équipée par exemple d'un microprocesseur $\mu$P, et pilotée par un programme d'ordinateur 710, stocké dans une mémoire 720 et mettant en œuvre le procédé de capture selon l'invention. A l'initialisation, les instructions de code du programme d'ordinateur 710 sont par exemple chargées dans une mémoire RAM, avant d'être exécutées par le processeur de l'unité de traitement 730.

Un tel dispositif 700 comprend :

- un récepteur 704, apte à recevoir une pluralité de paquets d'un équipement terminal
- un analyseur 701, apte à analyser une pluralité de paquets émis par un équipement terminal et destinés au serveur,
- un module 702 d'identification, apte à identifier un paquet de coopération parmi la pluralité de paquets analysés, ledit paquet de coopération comprenant la donnée de détermination correspondant à une clé de sécurité utilisée pour le chiffrement de paquets émis par l'équipement terminal à destination du serveur de données préalablement à l'envoi par l'équipement terminal dudit paquet de coopération,

- un module 703 de déchiffrement, apte à déchiffrer le paquet de coopération reçu à l'aide d'une clé de sécurité correspondant à la donnée de détermination du paquet de coopération identifié.

En relation avec la [Fig. 10], on présente un exemple de structure d'un dispositif de 800 de comptage selon un mode de réalisation de l'invention.

Le dispositif 800 de comptage met en œuvre le procédé de comptage, dont différents modes de réalisation viennent d'être décrits. Le dispositif 800 de comptage peut être mis en œuvre dans un dispositif d'un réseau de communication tel qu'un équipement terminal ou un équipement d'accès d'un réseau local, tel qu'une passerelle domestique, ou un terminal ou un équipement de type routeur.

Par exemple, le dispositif 800 comprend une unité de traitement 830, équipée par exemple d'un microprocesseur $\mu$P, et pilotée par un programme d'ordinateur 810, stocké dans une mémoire 820 et mettant en œuvre le procédé de comptage selon l'invention. A l'initialisation, les instructions de code du programme d'ordinateur 810 sont par exemple chargées dans une mémoire RAM, avant d'être exécutées par le processeur de l'unité de traitement 830.

Un tel dispositif 800 comprend :

- un émetteur 802,

  - apte à émettre une pluralité de paquets comprenant chacun une donnée de détermination d'une clé de sécurité utilisée pour le chiffrement du paquet,
  - apte à émettre un paquet de coopération comprenant le compteur ajouté à destination du serveur de données,

- un calculateur 801, apte à incrémenter un compteur des données relatives à l'application, notamment émises à destination du serveur de données, et apte à ajouter le compteur incrémenté dans un paquet de coopération comprenant la donnée de détermination correspondant à une clé de sécurité utilisée pour le chiffrement de paquets de la pluralité échangés entre l'équipement terminal et le serveur de données préalablement à l'envoi dudit paquet de coopération.

## Revendications

1. Procédé de capture d'un paquet d'une session chiffrée établie entre un équipement terminal (30) et un serveur de données (20), ledit paquet comprenant une donnée de détermination d'une clé de sécurité utilisé pour le chiffrement du paquet au sein de ladite session chiffrée, le procédé étant mis en œuvre par un dispositif (50) acheminant le paquet entre l'équipement terminal et le serveur de données, le procédé étant **caractérisé en ce qu'**il comprend :

   - analyse de la donnée de détermination de la clé de sécurité d'une pluralité de paquets échangés entre l'équipement terminal (30) et le serveur (20),
   - tant que la valeur de la donnée de détermination analysée est inchangée, transmission des paquets correspondants,
   - sur identification, dans lesdites paquets analysés, d'un paquet de coopération parmi la pluralité de paquets échangés, ledit paquet de coopération comprenant une première valeur (v0) de la donnée de détermination, distincte d'une seconde valeur (v1) des données de détermination des clés de sécurité des autres paquets de la pluralité déjà analysés, ladite première valeur (v0) correspondant à une clé de sécurité utilisé pour le chiffrement de paquets échangés entre l'équipement terminal et le serveur de données préalablement à l'envoi dudit paquet de coopération,
   - déchiffrement du paquet de coopération reçu à l'aide d'une clé de sécurité correspondant à la première valeur (v0) de la donnée de détermination du paquet de coopération identifié, ladite clé de sécurité correspondant à la première valeur (v0) étant une clé sécurité utilisé pour le chiffrement de paquets échangés entre l'équipement terminal et le serveur de données préalablement à l'envoi desdits paquets déjà analysés et/ou une clé de sécurité fournie audit dispositif.

2. Procédé de capture, selon la revendication 1, où la donnée de détermination est un élément binaire de phase indiquant un changement de clé à utiliser par le terminal et le serveur de données pour le chiffrement et le déchiffrement de paquets échangés entre l'équipement terminal et le serveur de données.

3. Procédé de capture, selon la revendication 1 ou la revendication 2, où le paquet de coopération est un paquet d'un protocole sécurisé de multiplexage de données, tel que le protocole QUIC, et l'identification du paquet de coopération est réalisée à partir d'un ou plusieurs des paramètres suivants :

- Bit de phase
- Valeur du bit spinbit du paquet QUIC
- Valeur des bits RR du paquet QUIC
- Identifiant de connexion

4. Procédé de capture, selon l'une des revendications 1 à 3, où l'identification d'un paquet de coopération fait suite à l'activation dans le dispositif d'une détection des paquets dont la donnée de détermination à une valeur distincte de la donnée de détermination d'une pluralité de paquets successifs préalablement reçus.

5. Procédé de capture, selon l'une des revendications 1 à 4, où la clé de sécurité associée à la donnée de détermination est émise à destination du dispositif après la fin de la session entre l'équipement terminal et le serveur de données.

6. Procédé de capture, selon l'une des revendications 1 à 5, où la clé de sécurité associée à la donnée de détermination était utilisée pour la sécurisation d'un échange de paquets d'une session précédente entre l'équipement terminal et le serveur de données.

7. Procédé de capture, selon l'une des revendications 1 à 6, où la clé de sécurité associée à la donnée de détermination est une clé négociée entre l'équipement terminal et le serveur de données lors d'une étape d'initialisation de la session.

8. Procédé de capture, selon l'une des revendications 1 à 7, où le paquet de coopération est retiré de la pluralité de paquets lors de l'acheminement de ladite pluralité.

9. Procédé de capture, selon l'une des revendications 1 à 8, où l'analyse, l'identification d'un paquet de coopération et le déchiffrement du paquet de coopération sont mis en œuvre pour des paquets émis par le serveur de données à destination de l'équipement terminal.

10. Procédé de capture, selon l'une des revendications 1 à 8, où l'analyse, l'identification d'un paquet de coopération et le déchiffrement du paquet de coopération sont mis en œuvre pour des paquets émis par l'équipement terminal à destination du serveur de données.

11. Procédé de comptage de données relatives à une application émises par un équipement terminal (30) vers un serveur de données (20) par l'intermédiaire d'un dispositif (50), à l'aide d'une session chiffrée entre l'équipement terminal (30) et le serveur (20), lesdites données étant émises dans une pluralité de paquets comprenant chacun une donnée de détermination d'une clé de sécurité utilisée pour le chiffrement du paquet correspondant au sein de ladite session chiffrée, le procédé étant mis en œuvre par l'équipement terminal, le procédé étant **caractérisé en ce qu'**il comprend lors de l'émission de ladite pluralité de paquets :

- l'incrémentation d'un compteur des données émises relatives à l'application,
- l'ajout du compteur incrémenté dans un paquet de coopération comprenant une donnée de détermination ayant une première valeur (v0) distincte d'une seconde valeur (v1) des données de détermination des clés de sécurité des autres paquets de la pluralité, ladite première valeur (v0) correspondant à une clé de sécurité utilisée pour le chiffrement de paquets de la pluralité échangés entre l'équipement terminal et le serveur de données préalablement à l'envoi dudit paquet de coopération, ledit paquet de coopération étant chiffré avec ladite clé de sécurité correspondant à ladite première valeur ;
- l'envoi du paquet de coopération comprenant le compteur ajouté à destination du serveur de données.

12. Procédé de comptage, selon la revendication 11, comprenant en outre l'envoi au dispositif d'une clé de sécurité correspondant à la donnée de détermination du paquet de coopération.

13. Procédé de comptage, selon la revendication 11ou la revendication 12, comprenant en outre l'envoi préalable d'un message d'activation du procédé de capture par le dispositif à destination du serveur de données.

14. Dispositif (50) de capture d'un paquet d'une session chiffrée établie entre un équipement terminal (30) et un serveur de données (20), ledit paquet comprenant une donnée de détermination d'une clé de sécurité utilisée pour le chiffrement du paquet au sein de ladite session chiffrée, ledit dispositif de capture étant **caractérisé en ce qu'**il comprend :

- un analyseur, adaptée pour analyser de la donnée de détermination de la clé de sécurité d'une pluralité de paquets échangés entre l'équipement terminal (30) et le serveur (20),
- un émetteur adapté pour transmettre des paquets correspondants aux paquets dont la donnée de détermination est inchangée,
- un module d'identification, adapté pour identifier un paquet de coopération parmi la pluralité de paquets émis, ledit paquet de coopération comprenant une première valeur (v0) de la donnée de détermination, distincte d'une seconde valeur (v1) des données de détermination des clés de sécurité des autres paquets de la pluralité déjà analysés, ladite première valeur (v0) correspondant à une clé de sécurité utilisée pour le chiffrement de paquets échangés entre l'équipement terminal et le serveur de données préalablement à l'envoi dudit paquet de coopération,
- un module de déchiffrement, adapté pour déchiffrer le paquet de coopération reçu à l'aide d'une clé de sécurité correspondant à la première valeur (v0) de la donnée de détermination du paquet de coopération identifié, ladite clé de sécurité correspondant à la première valeur (v0) étant une clé sécurité utilisée pour le chiffrement de paquets échangés entre l'équipement terminal et le serveur de données préalablement à l'envoi desdits paquets déjà analysés et/ou une clé de sécurité fournie.

15. Dispositif de comptage de données relatives à une application émises par un équipement terminal (30) vers un serveur de données (20) par l'intermédiaire d'un dispositif (50), à l'aide d'une session chiffrée entre l'équipement terminal et le serveur, lesdites données étant émises dans une pluralité de paquets comprenant chacun une donnée de détermination d'une clé de sécurité utilisée pour le chiffrement du paquet correspondant au sein de ladite session chiffrée, ledit dispositif de comptage étant **caractérisé en ce qu'**il comprend :

- un émetteur, adaptée pour émettre ladite pluralité de paquets,
- un calculateur, adapté pour incrémenter un compteur des données émises relatives à l'application, et adapté pour ajouter le compteur incrémenté dans un paquet de coopération comprenant une donnée de détermination ayant une première valeur (v0) distincte d'une seconde valeur (v1) des données de détermination des clés de sécurité des autres paquets de la pluralité, ladite première valeur (v0) correspondant à une clé de sécurité utilisée pour le chiffrement de paquets de la pluralité échangés entre l'équipement terminal et le serveur de données préalablement à l'envoi dudit paquet de coopération, ledit paquet de coopération étant chiffré avec ladite clé de sécurité correspondant à ladite première valeur.

16. Système de comptage de données relatives à une application émises par un équipement terminal vers un serveur de données par l'intermédiaire d'un dispositif, à l'aide d'une session chiffrée entre l'équipement terminal et le serveur comprenant au moins un dispositif de capture selon la revendication 14 et au moins un dispositif de comptage selon la revendication 15.

17. Programme d'ordinateur comportant des instructions pour la mise en œuvre du procédé de capture selon l'une quelconque des revendications 1 à 10, lorsque le programme est exécuté par un processeur.

18. Programme d'ordinateur comportant des instructions pour la mise en œuvre du procédé de comptage selon l'une quelconque des revendications 11 à 13, lorsque le programme est exécuté par un processeur.

**Patentansprüche**

1. Verfahren zum Erfassen eines Pakets einer verschlüsselten Sitzung, die zwischen einem Endgerät (30) und einem Datenserver (20) aufgebaut wird, wobei das Paket Bestimmungsdaten eines Sicherheitsschlüssels enthält, der zur Verschlüsselung des Pakets innerhalb der verschlüsselten Sitzung verwendet wird, wobei das Verfahren von einer Vorrichtung (50) durchgeführt wird, die das Paket zwischen dem Endgerät und dem Datenserver weiterleitet, wobei das Verfahren **dadurch gekennzeichnet ist, dass** es Folgendes aufweist:

- Analyse der Bestimmungsdaten des Sicherheitsschlüssels einer Vielzahl von Paketen, die zwischen dem Endgerät (30) und dem Server (20) ausgetauscht werden,
- solange der Wert der analysierten Bestimmungsdaten unverändert ist, Übertragung der entsprechenden Pakete,

- bei Identifizierung, in den analysierten Paketen, eines Kooperationspakets unter der Vielzahl von ausgetauschten Paketen, wobei das Kooperationspaket einen ersten Wert (v0) der Bestimmungsdaten aufweist, der sich von einem zweiten Wert (v1) der Bestimmungsdaten der Sicherheitsschlüssel der anderen bereits analysierten Pakete der Vielzahl unterscheidet, wobei der erste Wert (v0) einem Sicherheitsschlüssel entspricht, der zur Verschlüsselung von Paketen verwendet wird, die zwischen dem Endgerät und dem Datenserver vor dem Senden des Kooperationspakets ausgetauscht wurden,

- Entschlüsselung des empfangenen Kooperationspakets unter Verwendung eines Sicherheitsschlüssels, der dem ersten Wert (v0) der Bestimmungsdaten des identifizierten Kooperationspakets entspricht, wobei der dem ersten Wert (v0) entsprechende Sicherheitsschlüssel ein Sicherheitsschlüssel ist, der zur Verschlüsselung von Paketen verwendet wird, die zwischen dem Endgerät und dem Datenserver vor dem Senden der bereits analysierten Pakete ausgetauscht werden, und/oder ein Sicherheitsschlüssel, der der Vorrichtung zur Verfügung gestellt wird.

2. Erfassungsverfahren nach Anspruch 1, wobei die Bestimmungsdaten ein binäres Phasenelement sind, das eine Änderung des Schlüssels anzeigt, der von dem Endgerät und dem Datenserver zum Verschlüsseln und Entschlüsseln von Paketen verwendet werden soll, die zwischen dem Endgerät und dem Datenserver ausgetauscht werden.

3. Erfassungsverfahren nach Anspruch 1 oder Anspruch 2, wobei das Kooperationspaket ein Paket eines sicheren Datenmultiplexprotokolls, wie z. B. QUIC, ist und die Identifizierung des Kooperationspakets anhand eines oder mehrerer der folgenden Parameter erfolgt:

- Phasenbit
- Wert des Spinbit-Bits des QUIC-Pakets
- Wert der RR-Bits des QUIC-Pakets
- Anmelde-ID

4. Erfassungsverfahren nach einem der Ansprüche 1 bis 3, wobei die Identifizierung eines Kooperationspakets auf die Aktivierung einer Erkennung von Paketen in der Vorrichtung folgt, deren Bestimmungsdaten einen Wert haben, der sich von den Bestimmungsdaten einer Vielzahl von aufeinanderfolgenden, zuvor empfangenen Paketen unterscheidet.

5. Erfassungsverfahren nach einem der Ansprüche 1 bis 4, wobei der Sicherheitsschlüssel, der mit den Bestimmungsdaten verknüpft ist, nach Beendigung der Sitzung zwischen dem Endgerät und dem Datenserver an die Vorrichtung ausgegeben wird.

6. Erfassungsverfahren, nach einem der Ansprüche 1 bis 5, wobei der Sicherheitsschlüssel, der mit den Bestimmungsdaten verknüpft ist, zur Sicherung eines Paketaustauschs einer vorherigen Sitzung zwischen dem Endgerät und dem Datenserver verwendet wurde.

7. Erfassungsverfahren, nach einem der Ansprüche 1 bis 6, wobei der Sicherheitsschlüssel, der mit den Bestimmungsdaten verknüpft ist, ein Schlüssel ist, der zwischen dem Endgerät und dem Datenserver während eines Schritts zur Initialisierung der Sitzung ausgehandelt wird.

8. Erfassungsverfahren nach einem der Ansprüche 1 bis 7, wobei das Kooperationspaket aus der Vielzahl von Paketen während der Weiterleitung dieser Vielzahl entfernt wird.

9. Erfassungsverfahren nach einem der Ansprüche 1 bis 8, wobei die Analyse, die Identifizierung eines Kooperationspakets und die Entschlüsselung des Kooperationspakets für Pakete durchgeführt werden, die vom Datenserver an das Endgerät gesendet werden.

10. Erfassungsverfahren nach einem der Ansprüche 1 bis 8, wobei die Analyse, die Identifizierung eines Kooperationspakets und die Entschlüsselung des Kooperationspakets für Pakete durchgeführt werden, die vom Endgerät an den Datenserver gesendet werden.

11. Verfahren zum Zählen von anwendungsbezogenen Daten, die von einem Endgerät (30) über eine Vorrichtung (50) an einen Datenserver (20) gesendet werden, unter Verwendung einer verschlüsselten Sitzung zwischen dem Endgerät (30) und dem Server (20), wobei die Daten in einer Vielzahl von Paketen gesendet werden, die jeweils Bestimmungsdaten eines Sicherheitsschlüssels enthalten, der zur Verschlüsselung des entsprechenden Pakets innerhalb der verschlüsselten Sitzung verwendet wird, wobei das Verfahren von dem Endgerät durchgeführt wird, wobei das Verfahren **dadurch gekennzeichnet ist, dass** es beim Senden der genannten Vielzahl von Paketen Folgendes aufweist:

- Inkrementieren eines Zählers der gesendeten Daten, die sich auf die Anwendung beziehen,
- Hinzufügen des inkrementierten Zählers zu einem Kooperationspaket, das Bestimmungsdaten mit einem ersten Wert (v0) enthält, der sich von einem zweiten Wert (v1) der Bestimmungsdaten der Sicherheitsschlüssel der anderen Pakete der Vielzahl unterscheidet, wobei der erste Wert (v0) einem Sicherheitsschlüssel entspricht, der für die Verschlüsselung von Paketen der Vielzahl verwendet wird, die zwischen dem Endgerät und dem Datenserver vor dem Senden des Kooperationspakets ausgetauscht werden, wobei das Kooperationspaket mit dem Sicherheitsschlüssel verschlüsselt wird, der dem ersten Wert entspricht;
- Senden des Kooperationspakets, das den hinzugefügten Zähler enthält, an den Datenserver.

12. Zählverfahren, nach Anspruch 11, das darüber hinaus das Senden eines Sicherheitsschlüssels, der den Daten zur Bestimmung des Kooperationspakets entspricht, an die Vorrichtung aufweist.

13. Zählverfahren, nach Anspruch 11 oder Anspruch 12, das darüber hinaus das vorherige Senden einer Nachricht zur Aktivierung des Erfassungsverfahrens durch das Gerät an den Datenserver aufweist.

14. Vorrichtung (50) zum Erfassen eines Pakets einer verschlüsselten Sitzung, die zwischen einem Endgerät (30) und einem Datenserver (20) aufgebaut wird, wobei das Paket Bestimmungsdaten eines Sicherheitsschlüssels enthält, der zur Verschlüsselung des Pakets innerhalb der verschlüsselten Sitzung verwendet wird, wobei die Erfassungsvorrichtung **dadurch gekennzeichnet ist, dass** sie Folgendes aufweist:

- einen Analysator, der dazu geeignet ist, die Bestimmungsdaten des Sicherheitsschlüssels einer Vielzahl von Paketen zu analysieren, die zwischen dem Endgerät (30) und dem Server (20) ausgetauscht werden,
- einen Sender, der dazu geeignet ist, Pakete zu senden, die den Paketen entsprechen, deren Bestimmungsdaten unverändert sind,
- ein Identifizierungsmodul, das dazu geeignet ist, ein Kooperationspakets unter der Vielzahl von gesendeten Paketen zu identifizieren, wobei das Kooperationspaket einen ersten Wert (v0) der Bestimmungsdaten aufweist, der sich von einem zweiten Wert (v1) der Bestimmungsdaten der Sicherheitsschlüssel der anderen bereits analysierten Pakete der Vielzahl unterscheidet, wobei der erste Wert (v0) einem Sicherheitsschlüssel entspricht, der zur Verschlüsselung von Paketen verwendet wird, die zwischen dem Endgerät und dem Datenserver vor dem Senden des Kooperationspakets ausgetauscht wurden,
- ein Entschlüsselungsmodul, das dazu geeignet ist, das empfangene Kooperationspaket unter Verwendung eines Sicherheitsschlüssels zu entschlüsseln, der dem ersten Wert (v0) der Bestimmungsdaten des identifizierten Kooperationspakets entspricht, wobei der dem ersten Wert (v0) entsprechende Sicherheitsschlüssel ein Sicherheitsschlüssel ist, der zur Verschlüsselung von Paketen verwendet wird, die zwischen dem Endgerät und dem Datenserver vor dem Senden der bereits analysierten Pakete ausgetauscht werden, und/oder ein zur Verfügung gestellter Sicherheitsschlüssel.

15. Vorrichtung zum Zählen von anwendungsbezogenen Daten, die von einem Endgerät (30) über eine Vorrichtung (50) an einen Datenserver (20) gesendet werden, unter Verwendung einer verschlüsselten Sitzung zwischen dem Endgerät und dem Server, wobei die Daten in einer Vielzahl von Paketen gesendet werden, die jeweils Bestimmungsdaten eines Sicherheitsschlüssels enthalten, der zur Verschlüsselung des entsprechenden Pakets innerhalb der verschlüsselten Sitzung verwendet wird, wobei die Zählvorrichtung **dadurch gekennzeichnet ist, dass** sie Folgendes aufweist:

- einen Sender, der dazu geeignet ist, die Vielzahl von Paketen zu senden,
- einen Rechner, der dazu geeignet ist, einen Zähler der gesendeten anwendungsbezogenen Daten zu inkrementieren, und der dazu geeignet ist, den inkrementierten Zähler zu einem Kooperationspaket hinzuzufügen, das Bestimmungsdaten mit einem ersten Wert (v0) enthält, der sich von einem zweiten Wert (v1) der Bestimmungsdaten der Sicherheitsschlüssel der anderen Pakete der Vielzahl unterscheidet, wobei der erste Wert (v0) einem Sicherheitsschlüssel entspricht, der für die Verschlüsselung von Paketen der Vielzahl verwendet wird, die zwischen dem Endgerät und dem Datenserver vor dem Senden des Kooperationspakets ausgetauscht werden, wobei das Kooperationspaket mit dem Sicherheitsschlüssel verschlüsselt wird, der dem ersten Wert entspricht.

16. System zum Zählen von anwendungsbezogenen Daten, die von einem Endgerät über eine Vorrichtung an einen Datenserver gesendet werden, unter Verwendung einer verschlüsselten Sitzung zwischen dem Endgerät und dem Server, das mindestens eine Erfassungsvorrichtung nach Anspruch 14 und mindestens eine Zählvorrichtung nach Anspruch 15 aufweist.

17. Computerprogramm mit Anweisungen zur Durchführung des Erfassungsverfahrens nach einem der Ansprüche 1 bis 10, wenn das Programm von einem Prozessor ausgeführt wird.

18. Computerprogramm mit Anweisungen zur Durchführung des Zählverfahrens nach einem der Ansprüche 11 bis 13, wenn das Programm von einem Prozessor ausgeführt wird.

**Claims**

1. Method for capturing a packet from an encrypted session established between a terminal unit (30) and a data server (20), said packet comprising a datum for determining a security key used for encrypting the packet in said encrypted session, the method being implemented by a device (50) routing the packet between the terminal unit and the data server, the method being **characterized in that** it comprises:

   - analysing the datum for determining the security key of a plurality of packets exchanged between the terminal unit (30) and the server (20),
   - as long as the value of the analysed determining datum is unchanged, transmitting the corresponding packets,
   - upon identification, in said analysed packets, of a cooperation packet among the plurality of exchanged packets, said cooperation packet comprising a first value (v0) of the determining datum, distinct from a second value (v1) of the data for determining the security keys of the other packets of the plurality that have already been analysed, said first value (v0) corresponding to a security key used for encrypting packets exchanged between the terminal unit and the data server prior to sending said cooperation packet,
   - decrypting the received cooperation packet using a security key corresponding to the first value (v0) of the determining datum of the identified cooperation packet, said security key corresponding to the first value (v0) being a security key used for encrypting packets exchanged between the terminal unit and the data server prior to sending said packets that have already been analysed and/or a security key supplied to said device.

2. Capturing method according to Claim 1, wherein the determining datum is a binary phase element indicating a key change to be used by the terminal and the data server for encrypting and decrypting packets exchanged between the terminal unit and the data server.

3. Capturing method according to Claim 1 or Claim 2, wherein the cooperation packet is a packet of a secure data multiplexing protocol, such as the QUIC protocol, and the cooperation packet is identified from one or more of the following parameters:

   - phase bit;
   - value of the spin bit of the QUIC packet;
   - value of the RR bits of the QUIC packet;
   - connection identifier.

4. Capturing method according to any of Claims 1 to 3, wherein a cooperation packet is identified after activating, in the device, detection of the packets for which the determining datum has a value that differs from the determining datum of a plurality of successive packets previously received.

5. Capturing method according to any of Claims 1 to 4, wherein the security key associated with the determining datum is transmitted to the device after the end of the session between the terminal unit and the data server.

6. Capturing method according to any of Claims 1 to 5, wherein the security key associated with the determining datum was used for securing an exchange of packets from a previous session between the terminal unit and the data server.

7. Capturing method according to any of Claims 1 to 6, wherein the security key associated with the determining datum is a key negotiated between the terminal unit and the data server during a step of initializing the session.

8. Capturing method according to any of Claims 1 to 7, wherein the cooperation packet is removed from the plurality of packets when said plurality is routed.

9. Capturing method according to any of Claims 1 to 8, wherein the analysis, the identification of a cooperation packet and the decryption of the cooperation packet are implemented for packets transmitted by the data server to the terminal unit.

10. Capturing method according to any of Claims 1 to 8, wherein the analysis, the identification of a cooperation packet and the decryption of the cooperation packet are implemented for packets transmitted by the terminal unit to the data server.

11. Method for counting data relating to an application that are transmitted by a terminal unit (30) to a data server (20) by means of a device (50), using an encrypted session between the terminal unit (30) and the server (20), said data being transmitted in a plurality of packets each comprising a datum for determining a security key used for encrypting the corresponding packet in said encrypted session, the method being implemented by the terminal unit, the method being **characterized in that** it comprises,
during the transmission of said plurality of packets:

- incrementing a counter of the transmitted data relating to the application,
- adding the incremented counter to a cooperation packet comprising a determining datum with a first value (v0) distinct from a second value (v1) of the data for determining the security keys of the other packets of the plurality, said first value (v0) corresponding to a security key used for encrypting packets of the plurality exchanged between the terminal unit and the data server prior to sending said cooperation packet, said cooperation packet being encrypted with said security key corresponding to said first value;
- sending the cooperation packet comprising the added counter to the data server.

12. Counting method according to Claim 11, further comprising sending the device a security key corresponding to the determining datum of the cooperation packet.

13. Counting method according to Claim 11 or Claim 12, further comprising the device previously sending a message for activating the capturing method to the data server.

14. Device (50) for capturing a packet from an encrypted session established between a terminal unit (30) and a data server (20), said packet comprising a datum for determining a security key used for encrypting the packet in said encrypted session, said capturing device being **characterized in that** it comprises:

- an analyser, designed to analyse the datum for determining the security key of a plurality of packets exchanged between the terminal unit (30) and the server (20),
- a transmitter designed to transmit packets corresponding to packets the determining datum of which is unchanged,
- an identification module, designed to identify a cooperation packet among the plurality of transmitted packets, said cooperation packet comprising a first value (v0) of the determining datum, distinct from a second value (v1) of the data for determining the security keys of the other packets of the plurality that have already been analysed, said first value (v0) corresponding to a security key used for encrypting packets exchanged between the terminal unit and the data server prior to sending said cooperation packet,
- a decryption module, designed to decrypt the received cooperation packet using a security key corresponding to the first value (v0) of the determining datum of the identified cooperation packet, said security key corresponding to the first value (v0) being a security key used for encrypting packets exchanged between the terminal unit and the data server prior to sending said packets that have already been analysed and/or a supplied security key.

15. Device for counting data relating to an application that are transmitted by a terminal unit (30) to a data server (20) by means of a device (50), using an encrypted session between the terminal unit and the server, said data being transmitted in a plurality of packets each comprising a datum for determining a security key used for encrypting the corresponding packet in said encrypted session, said counting device being **characterized in that** it comprises:

- a transmitter, designed to transmit said plurality of packets,
- a computer, designed to increment a counter of the transmitted data relating to the application, and designed to add the incremented counter to a cooperation packet comprising a determining datum with a first value (v0) distinct from a second value (v1) of the data for determining the security keys of the other packets of the plurality, said first value (v0) corresponding to a security key used for encrypting packets of the plurality exchanged between the terminal unit and the data server prior to sending said cooperation packet, said cooperation packet being encrypted with said security key corresponding to said first value.

16. System for counting data relating to an application that are transmitted by a terminal unit to a data server by means of a device, using an encrypted session between the terminal unit and the server comprising at least one capturing device according to Claim 14 and at least one counting device according to Claim 15.

17. Computer program comprising instructions for implementing the capturing method according to any of Claims 1 to 10, when the program is executed by a processor.

18. Computer program comprising instructions for implementing the counting method according to any of Claims 11 to 13, when the program is executed by a processor.

[Fig. 1]

[Fig. 2]

[Fig 3]

[Fig 4]

[Fig 5]

[Fig 6]

[Fig 7]

[Fig 8]

[Fig 9]

[Fig 10]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050177506 A1

- WO 2020043319 A1